# EUROPÄISCHE PATENTANMELDUNG

(11) **EP 1 000 544 A1**
(43) Veröffentlichungstag der Anmeldung: **17.05.2000**
(21) Anmeldenummer: 99121619.3
(22) Anmeldetag: 30.10.1999
(51) Int. Cl.: A01N 37/44

(54) **Verwendung von Betainestern als mikrobizide Wirkstoffe**

(30) Priorität: 09.11.1998 DE 19851452
(71) Anmelder: Cognis Deutschland GmbH, 40589 Düsseldorf (DE)
(72) Erfinder: Stelter, Norbert, Dr., 40789 Monheim (DE); Uphues, Günter, 40789 Monheim (DE); Neumann, Peter, 40589 Düsseldorf (DE); Engels, Ursula, 40223 Düsseldorf (DE)

(57) **Zusammenfassung**

Vorgeschlagen wird die Verwendung von Betainestem der Formel (I), 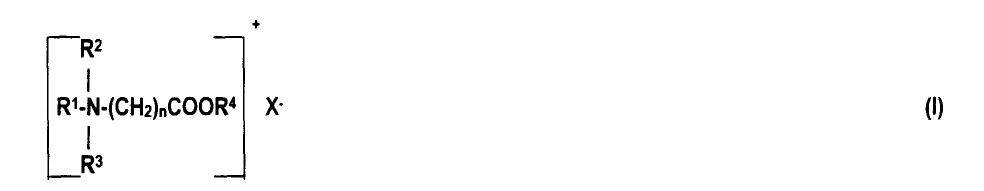 in der R¹ für lineare und/oder verzweigte Alkyl- und/oder Alkenylreste und/oder aromatische- und/oder cycloaliphatische Reste mit 2 bis 22 Kohlenstoffatomen, R², R³ unabhängig voneinander für Alkyl- und/oder Hydroxyalkylreste mit 1 bis 8 Kohlenstoffatomen, R⁴ für R¹ oder eine [A-OOC-(CH₂)ₙNR¹ R²R³]⁺X⁻-Gruppe, in der A für Alkylenreste mit 2 bis 22 Kohlenstoffatomen steht und/oder Reste [-CH₂CHR⁵-(OCH₂CHR⁵)ₚ-], in denen R⁵ für H und/oder Methyl und p für Zahlen von 1 bis 10 stehen; n für Zahlen von 1 bis 6 und X für ein Anion steht, als mikrobizide Wirkstoffe vorzugsweise in Wasch- und Reinigungsmitteln und kosmetischen und pharmazeutischen Zubereitungen.

## Beschreibung

### Gebiet der Erfindung

Die Erfindung betrifft die Verwendung von Betainestem als mikrobizide Wirkstoffe, insbesondere in Wasch- und Reinigungsmitteln und kosmetischen und pharmazeutischen Zubereitungen. Des weiteren betrifft die Erfindung oberflächenaktive Mittel, die eine zur Konservierung wirksame Menge von Betain-estem enthalten.

### Stand der Technik

Mikrobizide Wirkstoffe werden in der Regel eingesetzt, um die Vermehrung von Mikroorganismen zu verhindern bzw. diese ganz abzutöten. Bislang haben sich als mikrobizide Wirkstoffe quatemäre Ammoniumverbindungen wie Benzalkoniumchlorid oder Cetyltrimethylammoniumchlorid gut bewährt. Als nachteilig stellte sich jedoch in Kläranlagen die schwere biologische Abbaubarkeit derartiger Verbindungen heraus. Es besteht demnach ein Bedarf an mikrobizid wirkenden Verbindungen, die in ihrer Leistungsfähigkeit mit den bereits bekannten quatemären Ammoniumverbindungen vergleichbar sind, aber deutlich besser biologisch abbaubar sind.

Aus der amerikanischen Patentschrift **US 3,910,971** sind quatemäre Carbonsäurealkanolaminestersalze als mikrobizide Wirkstoffe bekannt. Diese Verbindungen zeigen jedoch gegenüber dem gramnegativen Bakterium Pseudomonas aeruginosa kaum Wirksamkeit, was angesichts des häufig auftretenden Wasserkeimes, der insbesondere zu Produktverkeimungen führt, von Nachteil ist.

In der europäischen Patentanmeldung **EP 0 461 419** A1 werden Poly(oxyalkylen)amino-alkanolester sowie deren Ammoniumverbindungen beschrieben, die ebenfalls eine mikrobizide Wirkung aufweisen sollen. Über die Wirksamkeit dieser Verbindungen gegenüber Bakterien, insbesondere gegenüber dem häufig vorkommenden Bakterium Pseudomonas aeruginosa, werden keine Angaben gemacht.

Die Aufgabe der vorliegenden Erfindung bestand somit darin, mikrobizid wirksame Verbindungen zur Verfügung zu stellen, die in ihrer mikrobiziden Wirksamkeit mit denen der herkömmlichen quatemären Ammoniumverbindungen vergleichbar sind. Vor allem sollten die Verbindungen gegen ein breites Spektrum von Mikroorganismen Wirksamkeit zeigen und zudem besondere ökologische Vorteile besitzen, d.h. besser biologisch abbaubar sein als die herkömmlichen quatemären Ammoniumverbindungen.

### Beschreibung der Erfindung

Ein Gegenstand der vorliegenden Erfindung betrifft daher die Verwendung von Betainestem der Formel **(I)**, 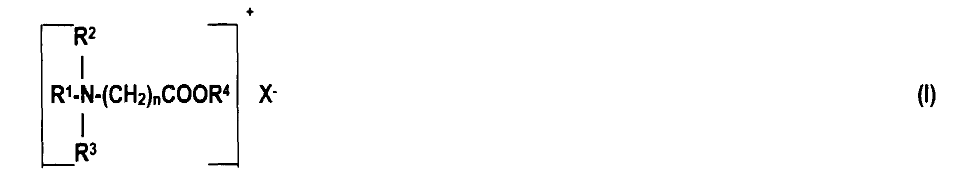 in der R¹ für lineare und/oder verzweigte Alkyl- und/oder Alkenylreste und/oder aromatische- und/oder cycloaliphatische Reste mit 2 bis 22 Kohlenstoffatomen, R², R³ unabhängig voneinander für Alkyl- und/oder Hydroxyalkylreste mit 1 bis 8 Kohlenstoffatomen, R⁴ für R¹ oder eine [A-OOC-(CH₂)ₙNR¹ R²R³]⁺X⁻-Gruppe, in der A für Alkylenreste mit 2 bis 22 Kohlenstoffatomen steht und/oder Reste [-CH₂CHR⁵-(OCH₂CHR⁵)ₚ-], in denen R⁵ für H und/oder Methyl und p für Zahlen von 1 bis 10 stehen; n für Zahlen von 1 bis 6 und X für ein Anion steht, als mikrobizide Wirkstoffe.

Ein weiterer Gegenstand der Erfindung betrifft ein Verfahren zur Konservierung von flüssigen oberflächenaktiven Mitteln, bei dem man den wäßrigen Zubereitungen eine wirksame Menge von Betainestem der Formel **(I)** zusetzt, 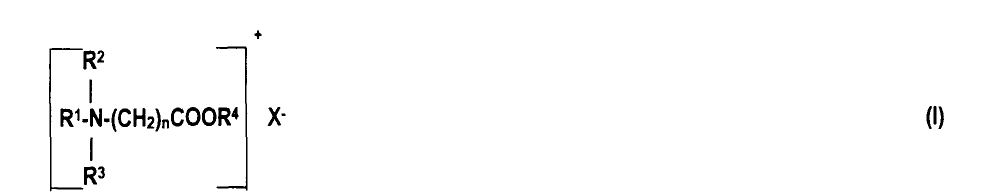 in der R¹ für lineare und/oder verzweigte Alkyl- und/oder Alkenylreste und/oder aromatische- und/oder cycloaliphatische Reste mit 2 bis 22 Kohlenstoffatomen, R², R³ unabhängig voneinander für Alkyl- und/oder Hydroxyalkylreste mit 1 bis 8 Kohlenstoffatomen, R⁴ für R¹ oder eine [A-OOC-(CH₂)ₙNR¹ R²R³]⁺ X⁻-Gruppe, in der A für Alkylenreste mit 2 bis 22 Kohlenstoffatomen steht und/oder Reste [-CH₂CHR⁵-(OCH₂CHR⁵)ₚ-], in denen R⁵ für H und/oder Methyl und p für Zahlen von 1 bis 10 stehen; n für Zahlen von 1 bis 6 und X für ein Anion steht.

Ein weiterer Gegenstand der Erfindung betrifft oberflächenaktive Mittel, die eine zur Konservierung wirksame Menge von Betainestem der Formel **(I)** enthalten, 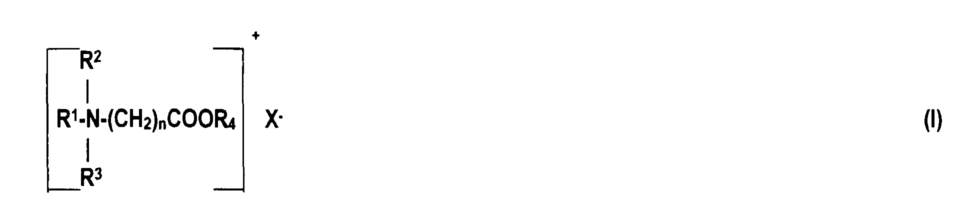 in der R¹ für lineare und/oder verzweigte Alkyl- und/oder Alkenylreste und/oder aromatische- und/oder cycloaliphatische Reste mit 2 bis 22 Kohlenstoffatomen, R², R³ unabhängig voneinander für Alkyl- und/oder Hydroxyalkylreste mit 1 bis 8 Kohlenstoffatomen,R⁴ für R¹ oder eine [A-OOC-(CH₂)ₙNR¹ R²R³]⁺X⁻-Gruppe, in der A für Alkylenreste mit 2 bis 22 Kohlenstoffatomen steht und/oder Reste [-CH₂CHR⁵-(OCH₂CHR⁵)ₚ-], in denen R⁵ für H und/oder Methyl und p für Zahlen von 1 bis 10 stehen; n für Zahlen von 1 bis 6 und X für ein Anion steht.

Überraschenderweise wurde gefunden, daß spezielle Ester amphoterer Tenside des Betaintyps (Betainester) als mikrobizide Wirkstoffe einsetzbar sind. Dabei zeichnen sie sich besonders durch ihre Wirksamkeit gegen ein breites Spektrum von Mikroorganismen im Vergleich zu den herkömmlichen Wirkstoffen aus. Besonders vorteilhaft ist ihre bessere biologische Abbaubarkeit gegenüber vergleichbar wirksamen Substanzen.

### Betainester

Betainester stellen bekannte Tenside dar, die in an sich bekannter Weise hergestellt werden können. Üblicherweise werden sie durch Veresterung von Halogencarbonsäuren mit Alkoholen bzw. Polyolen und anschließender Quatemierung durch alkylierte Amine hergestellt. Es werden beispielsweise Halogencarbonsäuren mit 2 bis 7 Kohlenstoffatomen, vorzugsweise Monochloressigsäure, mit Polyolen oder primären aliphatischen Alkoholen der Formel **(II)** umgesetzt,

**R**^{**6**}**OH** **(II)**

in der R⁶ für lineare und/oder verzweigte Alkyl- und/oder Alkenylreste, aromatische und/oder cycloaliphatische Reste und/oder mit 2 bis 22 Kohlenstoffatomen und 0 und/oder 1, 2 oder 3 Doppelbindungen steht. Typische Beispiele sind Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Linolylalkohol, Linolenylalkohol, Elaeostearylalkohol, Arachylalkohol, Gadoleylalkohol, Behenylalkohol, Erucylalkohol und Brassidylalkohol sowie deren technische Mischungen, die z.B. bei der Hochdruckhydrierung von technischen Methylestem auf Basis von Fetten und Ölen oder Aldehyden aus der Roelenschen Oxosynthese sowie als Monomerfraktion bei der Dimerisierung von ungesättigten Fettalkoholen anfallen. Bevorzugt sind technische Fettalkohole mit 8 bis 18 Kohlenstoffatomen, wie beispielsweise Kokos-, Palm-, Palmkem- oder Talgfettalkohol.

Polyole, die im Sinne der Erfindung ebenfalls als Ausgangsstoffe für die Betainester in Betracht kommen, besitzen vorzugsweise 2 bis 15 Kohlenstoffatome und mindestens zwei Hydroxylgruppen. Typische Beispiele sind
- Glycerin;
- Alkylenglycole, wie beispielsweise Ethylenglycol, Diethylenglycol, Propylenglycol, Butylenglycol, Hexylenglycol sowie Polyethylenglycole mit einem durchschnittlichen Molekulargewicht von 100 bis 1.000 Dalton;
- technische Oligoglyceringemische mit einem Eigenkondensationsgrad von 1,5 bis 10 wie etwa technische Diglyceringemische mit einem Diglyceringehalt von 40 bis 50 Gew.-%;
- Methyolverbindungen, wie insbesondere Trimethylolethan, Trimethylolpropan, Trimethylolbutan, Pentaerythrit und Dipentaerythrit;
- Niedrigalkylglucoside, insbesondere solche, mit 1 bis 8 Kohlenstoffen im Alkylrest, wie beispielsweise Methyl- und Butylglucosid;
- Zuckeralkohole mit 5 bis 12 Kohlenstoffatomen, wie beispielsweise Sorbit oder Mannit,
- Zucker mit 5 bis 12 Kohlenstoffatomen, wie beispielsweise Glucose oder Saccharose;
- Aminozucker, wie beispielsweise Glucamin.

Vorzugsweise werden Glycerin, Propylenglycol, Butylenglycol, Hexylenglycol sowie Polyethylenglycole mit einem durchschnittlichen Molekulargewicht im Bereich von 100 bis 1.000 Dalton eingesetzt.

Typische Beispiele für die alkylierten Amine mit denen die Ester quatemiert werden, sind Hexylmethylamin, Hexyldimethylamin, Octyldimethylamin, Decyldimethylamin, Dodecylmethylamin, Dodecyldimethylamin, Dodecylethylmethylamin, C_{12/14}-Kokosalkyldimethylamin, Myristyldimethylamin, Cetyldimethylamin, Stearyldimethylamin, Stearylethylmethylamin, Oleyldimethylamin, C_{16/18}-Talgalkyldimethylamin sowie deren technische Gemische.

### Gewerbliche Anwendbarkeit

Die beschriebenen Verbindungen werden erfindungsgemäß als mikrobizide Wirkstoffe verwendet. Im Sinne der Erfindung werden unter dem Begriff der mikrobiziden Wirkstoffe solche Wirkstoffe verstanden, die in der Lage sind, Bakterien, Hefen, Schimmelpilze, Viren und Protisten abzutöten oder an ihrer Vermehrung zu hindern. Derartige mikrobizide Wirkstoffe können in allen Produkten eingesetzt werden, in denen eine entsprechende Wirkung gewünscht wird. Vorzugsweise können sie in oberflächenaktiven Mitteln, vorzugsweise flüssigen oberflächenaktiven Mitteln, wie Wasch- und Reinigungsmitteln, beispielsweise in Handgeschirrspülmittel, Allzweckreiniger, Sanitärreiniger, Weichspüler für Textilien zur antimikrobiellen Textilausrüstung, in Desinfektionsmitteln, beispielsweise im Haushalt und in Krankenhäusern, in Konservierungsmitteln, beispielsweise zur Konservierung von technischen Rohstoffen und Produkten, in Kühlschmieremulsionen, in kosmetischen und/oder pharmazeutischen Zubereitungen zur Pflege und Reinigung von Haut, Haaren sowie Mund- und Zahnpflegemitteln und in Anstrichmitteln wie Leime, Farben und Holzschutzmitteln eingesetzt werden.

Die erfindungsgemäß verwendeten Verbindungen sind gegenüber einigen Bakterien schon wirksam in Mengen über 5 mg/l - berechnet als Aktivsubstanz und bezogen auf das Mittel. In der Regel beträgt die Einsatzmenge 5 bis 5000 mg/l, vorzugsweise 50 bis 1000 mg/l - berechnet als Aktivsubstanz und bezogen auf das Mittel. Bei konzentrierten Produkten können die Einsatzmengen der Betainester auch darüber liegen. Werden die konzentrierten Produkte jedoch vom Endverbraucher mit Wasser verdünnt, liegen die Einsatzmengen wieder im oben angegebenen Bereich.
Die erfindungsgemäß verwendeten Verbindungen können pur oder in Form ihrer Lösungen zur Anwendung kommen. Als geeignete Lösungsmittel sind Wasser und/oder niedere Alkohole zu nennen, insbesondere Ethanol, Propandiol und/oder Isopropanol.

### Kosmetische und/oder pharmazeutische Zubereitungen

Die erfindungsgemäßen Betainester können zur Herstellung von kosmetischen und/oder pharmazeutischen Zubereitungen, wie beispielsweise Haarshampoos, Haarlotionen, Schaumbäder, Cremes, Gele, Lotionen oder Salben dienen. Diese Mittel können ferner als weitere Hilfs- und Zusatzstoffe milde Tenside, Ölkörper, Emulgatoren, Überfettungsmittel, Perlglanzwachse, Konsistenzgeber, Verdickungsmittel, Polymere, Siliconverbindungen, Fette, Wachse, Stabilisatoren, biogene Wirkstoffe, Deowirkstoffe, Antischuppenmittel, Filmbildner, Quellmittel, UV-Lichtschutzfaktoren, Antioxidantien, Hydrotrope, Konservierungsmittel, Insektenrepellentien, Selbstbräuner, Solubilisatoren, Parfümöle, Farbstoffe und dergleichen enthalten.

Typische Beispiele für geeignete milde, d.h. besonders hautverträgliche **Tenside** sind Fettalkoholpolyglycolethersulfate, Monoglyceridsulfate, Mono- und/oder Dialkylsulfosuccinate, Fettsäureisethionate, Fettsäuresarcosinate, Fettsäuretauride, Fettsäureglutamate, Ethercarbonsäuren, Alkyloligoglucoside, Fettsäureglucamide und/oder Proteinfettsäurekondensate, letztere vorzugsweise auf Basis von Weizenproteinen.

Als **Ölkörper** kommen beispielsweise Guerbetalkohole auf Basis von Fettalkoholen mit 6 bis 18, vorzugsweise 8 bis 10 Kohlenstoffatomen, Ester von linearen C₆-C₂₂-Fettsäuren mit linearen C₆-C22-Fettalkoholen, Ester von verzweigten C₆-C₁₃-Carbonsäuren mit linearen C₆-C₂₂-Fettalkoholen, Ester von linearen C₆-C₂₂-Fettsäuren mit verzweigten Alkoholen, insbesondere 2-Ethylhexanol, Ester von Hydroxycarbonsäuren mit linearen oder verzweigten C₆-C₂₂-Fettalkoholen, insbesondere Dioctyl Malate, Ester von linearen und/oder verzweigten Fettsäuren mit mehrwertigen Alkoholen (wie z.B. Propylenglycol, Dimerdiol oder Trimertriol) und/oder Guerbetalkoholen, Triglyceride auf Basis C₆-C₁₀-Fettsäuren, flüssige Mono-/Di-/Triglyceridmischungen auf Basis von C₆-C₁₈-Fettsäuren, Ester von C₆-C₂₂-Fettalkoholen und/oder Guerbetalkoholen mit aromatischen Carbonsäuren, insbesondere Benzoesäure, Ester von C₂-C₁₂-Dicarbonsäuren mit linearen oder verzweigten Alkoholen mit 1 bis 22 Kohlenstoffatomen oder Polyolen mit 2 bis 10 Kohlenstoffatomen und 2 bis 6 Hydroxylgruppen, pflanzliche Öle, verzweigte primäre Alkohole, substituierte Cyclohexane, lineare und verzweigte C₆-C₂₂-Fettalkoholcarbonate, Guerbetcarbonate, Ester der Benzoesäure mit linearen und/oder verzweigten C₆-C₂₂-Alkoholen (z.B. Finsolv® TN), lineare oder verzweigte, symmetrische oder unsymmetrische Dialkylether mit 6 bis 22 Kohlenstoffatomen pro Alkylgruppe, Ringöffnungsprodukte von epoxidierten Fettsäureestem mit Polyolen, Siliconöle und/oder aliphatische bzw. naphthenische Kohlenwasserstoffe in Betracht.

Als **Emulgatoren** kommen beispielsweise nichtionogene Tenside aus mindestens einer der folgenden Gruppen in Frage:
(1) Anlagerungsprodukte von 2 bis 30 Mol Ethylenoxid und/ oder 0 bis 5 Mol Propylenoxid an lineare Fettalkohole mit 8 bis 22 C-Atomen, an Fettsäuren mit 12 bis 22 C-Atomen und an Alkylphenole mit 8 bis 15 C-Atomen in der Alkylgruppe;
(2) C_{12/18}-Fettsäuremono- und -diester von Anlagerungsprodukten von 1 bis 30 Mol Ethylenoxid an Glycerin;
(3) Glycerinmono- und -diester und Sorbitanmono- und -diester von gesättigten und ungesättigten Fettsäuren mit 6 bis 22 Kohlenstoffatomen und deren Ethylenoxidanlagerungsprodukte;
(4) Alkylmono- und -oligoglycoside mit 8 bis 22 Kohlenstoffatomen im Alkylrest und deren ethoxylierte Analoga;
(5) Anlagerungsprodukte von 15 bis 60 Mol Ethylenoxid an Ricinusöl und/oder gehärtetes Ricinusöl;
(6) Polyol- und insbesondere Polyglycerinester, wie z.B. Polyglycerinpolyricinoleat, Polyglycerinpoly-12-hydroxystearat oder Polyglycerindimeratisostearat. Ebenfalls geeignet sind Gemische von Verbindungen aus mehreren dieser Substanzklassen;
(7) Anlagerungsprodukte von 2 bis 15 Mol Ethylenoxid an Ricinusöl und/oder gehärtetes Ricinusöl;
(8) Partialester auf Basis linearer, verzweigter, ungesättigter bzw. gesättigter C_{6/22}-Fettsäuren, Ricinolsäure sowie 12-Hydroxystearinsäure und Glycerin, Polyglycerin, Pentaerythrit, Dipentaerythrit, Zuckeralkohole (z.B. Sorbit), Alkylglucoside (z.B. Methylglucosid, Butylglucosid, Laurylglucosid) sowie Polyglucoside (z.B. Cellulose);
(9) Mono-, Di- und Trialkylphosphate sowie Mono-, Di- und/oder Tri-PEG-alkylphosphate und deren Salze;
(10) Wollwachsalkohole;
(11) Polysiloxan-Polyalkyl-Polyether-Copolymere bzw. entsprechende Derivate;
(12) Mischester aus Pentaerythrit, Fettsäuren, Citronensäure und Fettalkohol gemäß **DE 1165574 PS** und/oder Mischester von Fettsäuren mit 6 bis 22 Kohlenstoffatomen, Methylglucose und Polyolen, vorzugsweise Glycerin oder Polyglycerin sowie
(13) Polyalkylenglycole.

Die Anlagerungsprodukte von Ethylenoxid und/oder von Propylenoxid an Fettalkohole, Fettsäuren, Alkylphenole, Glycerinmono- und -diester sowie Sorbitanmono- und -diester von Fettsäuren oder an Ricinusöl stellen bekannte, im Handel erhältliche Produkte dar. Es handelt sich dabei um Homologengemische, deren mittlerer Alkoxylierungsgrad dem Verhältnis der Stoffmengen von Ethylenoxid und/ oder Propylenoxid und Substrat, mit denen die Anlagerungsreaktion durchgeführt wird, entspricht. C_{12/18}-Fettsäuremono- und -diester von Anlagerungsprodukten von Ethylenoxid an Glycerin sind aus **DE 2024051 PS** als Rückfettungsmittel für kosmetische Zubereitungen bekannt.

C_{8/18}-Alkylmono- und -oligoglycoside, ihre Herstellung und ihre Verwendung sind aus dem Stand der Technik bekannt. Ihre Herstellung erfolgt insbesondere durch Umsetzung von Glucose oder Oligosacchariden mit primären Alkoholen mit 8 bis 18 C-Atomen. Bezüglich des Glycosidrestes gilt, daß sowohl Monoglycoside, bei denen ein cyclischer Zuckerrest glycosidisch an den Fettalkohol gebunden ist, als auch oligomere Glycoside mit einem Oligomerisationsgrad bis vorzugsweise etwa 8 geeignet sind. Der Oligomerisierungsgrad ist dabei ein statistischer Mittelwert, dem eine für solche technischen Produkte übliche Homologenverteilung zugrunde liegt.

Weiterhin können als Emulgatoren zwitterionische Tenside verwendet werden. Als zwitterionische Tenside werden solche oberflächenaktiven Verbindungen bezeichnet, die im Molekül mindestens eine quartäre Ammoniumgruppe und mindestens eine Carboxylat- und eine Sulfonatgruppe tragen. Besonders geeignete zwitterionische Tenside sind die sogenannten Betaine wie die N-Alkyl-N,N-dimethylammoniumglycinate, beispielsweise das Kokosalkyldimethylammoniumglycinat, N-Acylaminopropyl-N,N-dimethylammoniumglycinate, beispielsweise das Kokosacylaminopropyldimethylammoniumglycinat, und 2-Alkyl-3-carboxylmethyl-3-hydroxyethylimidazoline mit jeweils 8 bis 18 C-Atomen in der Alkyl- oder Acylgruppe sowie das Kokosacylaminoethylhydroxyethylcarboxymethylglycinat. Besonders bevorzugt ist das unter der CTFA-Bezeichnung *Cocamidopropyl Betaine* bekannte Fettsäureamid-Derivat. Ebenfalls geeignete Emulgatoren sind ampholytische Tenside. Unter ampholytischen Tensiden werden solche oberflächenaktiven Verbindungen verstanden, die außer einer C_{8/18}-Alkyl- oder -Acylgruppe im Molekül mindestens eine freie Aminogruppe und mindestens eine -COOH- oder -SO₃H-Gruppe enthalten und zur Ausbildung innerer Salze befähigt sind. Beispiele für geeignete ampholytische Tenside sind N-Alkylglycine, N-Alkylpropionsäuren, N-Alkylaminobuttersäuren, N-Alkyliminodipropionsäuren, N-Hydroxyethyl-N-alkylamidopropylglycine, N-Alkyltaurine, N-Alkylsarcosine, 2-Alkylaminopropionsäuren und Alkylaminoessigsäuren mit jeweils etwa 8 bis 18 C-Atomen in der Alkylgruppe. Besonders bevorzugte ampholytische Tenside sind das N-Kokosalkylaminopropionat, das Kokosacylaminoethylaminopropionat und das C_{12/18}-Acylsarcosin. Neben den ampholytischen kommen auch quartäre Emulgatoren in Betracht, wobei solche vom Typ der Esterquats, vorzugsweise methylquatemierte Difettsäuretriethanolaminester-Salze, besonders bevorzugt sind.

Als **Überfettungsmittel** können Substanzen wie beispielsweise Lanolin und Lecithin sowie polyethoxylierte oder acylierte Lanolin- und Lecithinderivate, Polyolfettsäureester, Monoglyceride und Fettsäurealkanolamide verwendet werden, wobei die letzteren gleichzeitig als Schaumstabilisatoren dienen.

Als **Perlglanzwachse** kommen beispielsweise in Frage: Alkylenglycolester, speziell Ethylenglycoldistearat; Fettsäurealkanolamide, speziell Kokosfettsäurediethanolamid; Partialglyceride, speziell Stearinsäuremonoglycerid; Ester von mehrwertigen, gegebenenfalls hydroxysubstituierte Carbonsäuren mit Fettalkoholen mit 6 bis 22 Kohlenstoffatomen, speziell langkettige Ester der Weinsäure; Fettstoffe, wie beispielsweise Fettalkohole, Fettketone, Fettaldehyde, Fettether und Fettcarbonate, die in Summe mindestens 24 Kohlenstoffatome aufweisen, speziell Lauron und Distearylether; Fettsäuren wie Stearinsäure, Hydroxystearinsäure oder Behensäure, Ringöffnungsprodukte von Olefinepoxiden mit 12 bis 22 Kohlenstoffatomen mit Fettalkoholen mit 12 bis 22 Kohlenstoffatomen und/oder Polyolen mit 2 bis 15 Kohlenstoffatomen und 2 bis 10 Hydroxylgruppen sowie deren Mischungen.

Als **Konsistenzgeber** kommen in erster Linie Fettalkohole oder Hydroxyfettalkohole mit 12 bis 22 und vorzugsweise 16 bis 18 Kohlenstoffatomen und daneben Partialglyceride, Fettsäuren oder Hydroxyfettsäuren in Betracht. Bevorzugt ist eine Kombination dieser Stoffe mit Alkyloligoglucosiden und/oder Fettsäure-N-methylglucamiden gleicher Kettenlänge und/oder Polyglycerinpoly-12-hydroxystearaten. Geeignete **Verdickungsmittel** sind beispielsweise Polysaccharide, insbesondere Xanthan-Gum, Guar-Guar, Agar-Agar, Alginate und Tylosen, Carboxymethylcellulose und Hydroxyethylcellulose, ferner höhermolekulare Polyethylenglycolmono- und -diester von Fettsäuren, Polyacrylate, (z.B. Carbopole® von Goodrich oder Synthalene® von Sigma), Polyacrylamide, Polyvinylalkohol und Polyvinylpyrrolidon, Tenside wie beispielsweise ethoxylierte Fettsäureglyceride, Ester von Fettsäuren mit Polyolen wie beispielsweise Pentaerythrit oder Trimethylolpropan, Fettalkoholethoxylate mit eingeengter Homologenverteilung oder Alkyloligoglucoside sowie Elektrolyte wie Kochsalz und Ammoniumchlorid.

Geeignete **kationische Polymere** sind beispielsweise kationische Cellulosederivate, wie z.B. eine quaternierte Hydroxyethylcellulose, die unter der Bezeichnung Polymer JR 400® von Amerchol erhältlich ist, kationische Stärke, Copolymere von Diallylammoniumsalzen und Acrylamiden, quaternierte Vinylpyrrolidon/Vinylimidazol-Polymere, wie z.B. Luviquat® (BASF), Kondensationsprodukte von Polyglycolen und Aminen, quatemierte Kollagenpolypeptide, wie beispielsweise Lauryldimonium hydroxypropyl hydrolyzed collagen (Lamequat®L/Grünau), quaternierte Weizenpolypeptide, Polyethylenimin, kationische Siliconpolymere, wie z.B. Amidomethicone, Copolymere der Adipinsäure und Dimethylaminohydroxypropyldiethylentriamin (Cartaretine®/Sandoz), Copolymere der Acrylsäure mit Dimethyldiallylammoniumchlorid (Merquat® 550/Chemviron), Polyaminopolyamide, wie z.B. beschrieben in der **FR 2252840 A** sowie deren vemetzte wasserlöslichen Polymere, kationische Chitinderivate wie beispielsweise quatemiertes Chitosan, gegebenenfalls mikrokristallin verteilt, Kondensationsprodukte aus Dihalogenalkylen, wie z.B. Dibrombutan mit Bisdialkylaminen, wie z.B. Bis-Dimethylamino-1,3-propan, kationischer Guar-Gum, wie z.B. Jaguar® CBS, Jaguar® C-17, Jaguar® C-16 der Firma Celanese, quatemierte Ammoniumsalz-Polymere, wie z.B. Mirapol® A-15, Mirapol® AD-1, Mirapol® AZ-1 der Firma Miranol.

Als **anionische, zwitterionische, amphotere und nichtionische Polymere** kommen beispielsweise Vinylacetat/Crotonsäure-Copolymere, VinylpyrrolidonNinylacrylat-Copolymere, Vinylacetat/Butylmaleat/ Isobomylacrylat-Copolymere, Methylvinylether/Maleinsäureanhydrid-Copolymere und deren Ester, unvemetzte und mit Polyolen vemetzte Polyacrylsäuren, Acrylamidopropyltrimethylammoniumchlorid/ Acrylat-Copolymere, Octylacrylamid/Methylmethacrylat/tert.Butylaminoethylmethacrylat/2-Hydroxypropylmethacrylat-Copolymere, Polyvinylpyrrolidon, VinylpyrrolidonNinylacetat-Copolymere, Vinylpyrrolidon/Dimethylaminoethylmethacrylat/Vinylcaprolactam-Terpolymere sowie gegebenenfalls derivatisierte Cellulose-ether und Silicone in Frage.

Geeignete **Siliconverbindungen** sind beispielsweise Dimethylpolysiloxane, Methylphenylpolysiloxane, cyclische Silicone sowie amino-, fettsäure-, alkohol-, polyether-, epoxy-, fluor-, glykosid- und/oder alkylmodifizierte Siliconverbindungen, die bei Raumtemperatur sowohl flüssig als auch harzförmig vorliegen können. Eine detaillierte Übersicht über geeignete flüchtige Silicone findet sich zudem von Todd et al. in **Cosm.Toil. 91, 27 (1976)**.

Typische Beispiele für **Fette** sind Glyceride, als **Wachse** kommen u.a. Bienenwachs, Camaubawachs, Candelillawachs, Montanwachs, Paraffinwachs, hydriertes Ricinusöle, bei Raumtemperatur feste Fettsäureester oder Mikrowachse gegebenenfalls in Kombination mit hydrophilen Wachsen, z.B. Cetylstearylalkohol oder Partialglyceriden in Frage. Als **Stabilisatoren** können Metallsalze von Fettsäuren, wie z.B. Magnesium-, Aluminium- und/oder Zinkstearat bzw. -ricinoleat eingesetzt werden.

Unter **biogenen Wirkstoffen** sind beispielsweise Tocopherol, Tocopherolacetat, Tocopherolpalmitat, Ascorbinsäure, Desoxyribonucleinsäure, Retinol, Bisabolol, Allantoin, Phytantriol, Panthenol, AHA-Säuren, Aminosäuren, Ceramide, Pseudoceramide, essentielle Öle, Pflanzenextrakte und Vitaminkomplexe zu verstehen.

Als **Deowirkstoffe** kommen z.B. Antiperspirantien wie etwa Aluminiumchlorhydate in Frage. Hierbei handelt es sich um farblose, hygroskopische Kristalle, die an der Luft leicht zerfließen und beim Eindampfen wäßriger Aluminiumchloridlösungen anfallen. Aluminiumchlorhydrat wird zur Herstellung von schweißhemmenden und desodorierenden Zubereitungen eingesetzt und wirkt wahrscheinlich über den partiellen Verschluß der Schweißdrüsen durch Eiweiß- und/oder Polysaccharidfällung [vgl. **J.Soc.Cosm.Chem. 24, 281** (1973)]. Unter der Marke Locron® der Hoechst AG, Frankfurt/FRG, befindet beispielsweise sich ein Aluminiumchlorhydrat im Handel, das der Formel [Al₂(OH)₅Cl]*2,5 H20 entspricht und dessen Einsatz besonders bevorzugt ist [vgl. **J.Pharm.Pharmacol. 26, 531** (1975)]. Neben den Chlorhydraten können auch Aluminiumhydroxylactate sowie saure Aluminium/Zirkoniumsalze eingesetzt werden. Als weitere Deowirkstoffe können Esteraseinhibitoren zugesetzt werden. Hierbei handelt es sich vorzugsweise um Trialkylcitrate wie Trimethylcitrat, Tripropylcitrat, Triisopropylcitrat, Tributylcitrat und insbesondere Triethylcitrat (Hydagen® CAT, Henkel KGaA, Düsseldorf/FRG). Die Stoffe inhibieren die Enzymaktivität und reduzieren dadurch die Geruchsbildung. Wahrscheinlich wird dabei durch die Spaltung des Citronensäureesters die freie Säure freigesetzt, die den pH-Wert auf der Haut soweit absenkt, daß dadurch die Enzyme inhibiert werden. Weitere Stoffe, die als Esteraseinhibitoren in Betracht kommen, sind Dicarbonsäuren und deren Ester, wie beispielsweise Glutarsäure, Glutarsäuremonoethylester, Glutarsäurediethylester, Adipinsäure, Adipinsäuremonoethylester, Adipinsäurediethylester, Malonsäure und Malonsäurediethylester, Hydroxycarbnonsäuren und deren Ester wie beispielsweise Citronensäure, Äpfelsäure, Weinsäure oder Weinsäurediethylester. Antibakterielle Wirkstoffe, die die Keimflora beeinflussen und schweißzersetzende Bakterien abtöten bzw. in ihrem Wachstum hemmen, können ebenfalls in den Stiftzubereitungen enthalten sein. Beispiele hierfür sind Chitosan, Phenoxyethanol und Chlorhexidingluconat. Besonders wirkungsvoll hat sich auch 5-Chlor-2-(2,4-dichlorphen-oxy)-phenol erwiesen, das unter der Marke Irgasan® von der Ciba-Geigy, Basel/CH vertrieben wird.

Als **Antischuppenmittel** können Climbazol, Octopirox und Zinkpyrethion eingesetzt werden. Gebräuchliche **Filmbildner** sind beispielsweise Chitosan, mikrokristallines Chitosan, quatemiertes Chitosan, Polyvinylpyrrolidon, Vinylpyrrolidon-Vinylacetat-Copolymerisate, Polymere der Acrylsäurereihe, quatemäre Cellulose-Derivate, Kollagen, Hyaluronsäure bzw. deren Salze und ähnliche Verbindungen. Als **Quellmittel** für wäßrige Phasen können Montmorillonite, Clay Mineralstoffe, Pemulen sowie alkylmodifizierte Carbopoltypen (Goodrich) dienen. Weitere geeignete Polymere bzw. Quellmittel können der Übersicht von R.Lochhead in **Cosm.Toil. 108, 95 (1993)** entnommen werden.

Unter **UV-Lichtschutzfaktoren** sind beispielsweise bei Raumtemperatur flüssig oder kristallin vorliegende organische Substanzen (Lichtschutzfilter) zu verstehen, die in der Lage sind, ultraviolette Strahlen zu absorbieren und die aufgenommene Energie in Form längerwelliger Strahlung, z.B. Wärme wieder abzugeben. UVB-Filter können öllöslich oder wasserlöslich sein. Als öllösliche Substanzen sind z.B. zu nennen:
- 3-Benzylidencampher bzw. 3-Benzylidennorcampher und dessen Derivate, z.B. 3-(4-Methylbenzyliden)campher wie in der **EP 0693471 B1** beschrieben;
- 4-Aminobenzoesäurederivate, vorzugsweise 4-(Dimethylamino)benzoesäure-2-ethylhexylester, 4-(Dimethylamino)benzoesäure-2-octylester und 4-(Dimethylamino)benzoesäureamylester;
- Ester der Zimtsäure, vorzugsweise 4-Methoxyzimtsäure-2-ethylhexylester, 4-Methoxyzimtsäurepropylester, 4-Methoxyzimtsäureisoamylester 2-Cyano-3,3-phenylzimtsäure-2-ethylhexylester (Octocrylene);
- Ester der Salicylsäure, vorzugsweise Salicylsäure-2-ethylhexylester, Salicylsäure-4-isopropylbenzylester, Salicylsäurehomomenthylester;
- Derivate des Benzophenons, vorzugsweise 2-Hydroxy-4-methoxybenzophenon, 2-Hydroxy-4-methoxy-4'-methylbenzophenon, 2,2'-Dihydroxy-4-methoxybenzophenon;
- Ester der Benzalmalonsäure, vorzugsweise 4-Methoxybenzmalonsäuredi-2-ethylhexylester;
- Triazinderivate, wie z.B. 2,4,6-Trianilino-(p-carbo-2'-ethyl-1'-hexyloxy)-1,3,5-triazin und Octyl Triazon, wie in der **EP 0818450 A1** beschrieben;
- Propan-1,3-dione, wie z.B. 1-(4-tert.Butylphenyl)-3-(4'methoxyphenyl)propan-1,3-dion;
- Ketotricyclo(5.2.1.0)decan-Derivate, wie in der **EP 0694521 B1** beschrieben.

Als wasserlösliche Substanzen kommen in Frage:
- 2-Phenylbenzimidazol-5-sulfonsäure und deren Alkali-, Erdalkali-, Ammonium-, Alkylammonium-, Alkanolammonium- und Glucammoniumsalze;
- Sulfonsäurederivate von Benzophenonen, vorzugsweise 2-Hydroxy-4-methoxybenzophenon-5-sulfonsäure und ihre Salze;
- Sulfonsäurederivate des 3-Benzylidencamphers, wie z.B. 4-(2-Oxo-3-bomylidenmethyl)benzolsulfonsäure und 2-Methyl-5-(2-oxo-3-bornyliden)sulfonsäure und deren Salze.

Als typische UV-A-Filter kommen insbesondere Derivate des Benzoylmethans in Frage, wie beispielsweise 1-(4'-tert.Butylphenyl)-3-(4'-methoxyphenyl)propan-1,3-dion, 4-tert.-Butyl-4'-methoxydibenzoylmethan (Parsol 1789), oder 1-Phenyl-3-(4'-isopropylphenyl)-propan-1,3-dion. Die UV-A und UV-B-Filter können selbstverständlich auch in Mischungen eingesetzt werden. Neben den genannten löslichen Stoffen kommen für diesen Zweck auch unlösliche Lichtschutzpigmente, nämlich feindisperse Metalloxide bzw. Salze in Frage. Beispiele für geeignete Metalloxide sind insbesondere Zinkoxid und Titandioxid und daneben Oxide des Eisens, Zirkoniums, Siliciums, Mangans, Aluminiums und Cers sowie deren Gemische. Als Salze können Silicate (Talk), Bariumsulfat oder Zinkstearat eingesetzt werden. Die Oxide und Salze werden in Form der Pigmente für hautpflegende und hautschützende Emulsionen und dekorative Kosmetik verwendet. Die Partikel sollten dabei einen mittleren Durchmesser von weniger als 100 nm, vorzugsweise zwischen 5 und 50 nm und insbesondere zwischen 15 und 30 nm aufweisen. Sie können eine sphärische Form aufweisen, es können jedoch auch solche Partikel zum Einsatz kommen, die eine ellipsoide oder in sonstiger Weise von der sphärischen Gestalt abweichende Form besitzen. In Sonnenschutzmitteln werden bevorzugt sogenannte Mikro- oder Nanopigmente eingesetzt. Vorzugsweise wird mikronisiertes Zinkoxid verwendet.

Weitere geeignete UV-Lichtschutzfilter sind der Übersicht von P.Finkel in **SÖFW-Journal 122, 543 (1996)** zu entnehmen.

Neben den beiden vorgenannten Gruppen primärer Lichtschutzstoffe können auch sekundäre Lichtschutzmittel vom Typ der Antioxidantien eingesetzt werden, die die photochemische Reaktionskette unterbrechen, welche ausgelöst wird, wenn UV-Strahlung in die Haut eindringt. Typische Beispiele hierfür sind Aminosäuren (z.B. Glycin, Histidin, Tyrosin, Tryptophan) und deren Derivate, Imidazole (z.B. Urocaninsäure) und deren Derivate, Peptide wie D,L-Camosin, D-Camosin, L-Carnosin und deren Derivate (z.B. Anserin), Carotinoide, Carotine (z.B. α-Carotin, β-Carotin, Lycopin) und deren Derivate, Chlorogensäure und deren Derivate, Liponsäure und deren Derivate (z.B. Dihydroliponsäure), Aurothioglucose, Propylthiouracil und andere Thiole (z.B. Thioredoxin, Glutathion, Cystein, Cystin, Cystamin und deren Glycosyl-, N-Acetyl-, Methyl-, Ethyl-, Propyl-, Amyl-, Butyl- und Lauryl-, Palmitoyl-, Oleyl-, γ-Linoleyl-, Cholesteryl- und Glycerylester) sowie deren Salze, Dilaurylthiodipropionat, Distearylthiodipropionat, Thiodipropionsäure und deren Derivate (Ester, Ether, Peptide, Lipide, Nukleotide, Nukleoside und Salze) sowie Sulfoximinverbindungen (z.B. Buthioninsulfoximine, Homocysteinsulfoximin, Butioninsulfone, Penta-, Hexa-, Heptathioninsulfoximin) in sehr geringen verträglichen Dosierungen (z.B. pmol bis µmol/kg), ferner (Metall)-Chelatoren (z.B. α-Hydroxyfettsäuren, Palmitinsäure, Phytinsäure, Lactoferrin), α-Hydroxysäuren (z.B. Citronensäure, Milchsäure, Apfelsäure), Huminsäure, Gallensäure, Gallenextrakte, Bilirubin, Biliverdin, EDTA, EGTA und deren Derivate, ungesättigte Fettsäuren und deren Derivate (z.B. γ-Linolensäure, Linolsäure, Ölsäure), Folsäure und deren Derivate, Ubichinon und Ubichinol und deren Derivate, Vitamin C und Derivate (z.B. Ascorbylpalmitat, Mg-Ascorbylphosphat, Ascorbylacetat), Tocopherole und Derivate (z.B. Vitamin-E-acetat), Vitamin A und Derivate (Vitamin-A-palmitat) sowie Koniferylbenzoat des Benzoeharzes, Rutinsäure und deren Derivate, α-Glycosylrutin, Ferulasäure, Furfurylidenglucitol, Camosin, Butylhydroxytoluol, Butylhydroxyanisol, Nordihydroguajakharzsäure, Nordihydroguajaretsäure, Trihydroxybutyrophenon, Harnsäure und deren Derivate, Mannose und deren Derivate, Superoxid-Dismutase, Zink und dessen Derivate (z.B. ZnO, ZnSO₄) Selen und dessen Derivate (z.B. Selen-Methionin), Stilbene und deren Derivate (z.B. Stilbenoxid, trans-Stilbenoxid) und die erfindungsgemäß geeigneten Derivate (Salze, Ester, Ether, Zucker, Nukleotide, Nukleoside, Peptide und Lipide) dieser genannten Wirkstoffe.

Zur Verbesserung des Fließverhaltens können ferner **Hydrotrope**, wie beispielsweise Ethanol, Isopropylalkohol, oder Polyole eingesetzt werden. Polyole, die hier in Betracht kommen, besitzen vorzugsweise 2 bis 15 Kohlenstoffatome und mindestens zwei Hydroxylgruppen. Typische Beispiele sind
- Glycerin;
- Alkylenglycole, wie beispielsweise Ethylenglycol, Diethylenglycol, Propylenglycol, Butylenglycol, Hexylenglycol sowie Polyethylenglycole mit einem durchschnittlichen Molekulargewicht von 100 bis 1.000 Dalton;
- technische Oligoglyceringemische mit einem Eigenkondensationsgrad von 1,5 bis 10 wie etwa technische Diglyceringemische mit einem Diglyceringehalt von 40 bis 50 Gew.-%;
- Methyolverbindungen, wie insbesondere Trimethylolethan, Trimethylolpropan, Trimethylolbutan, Pentaerythrit und Dipentaerythrit;
- Niedrigalkylglucoside, insbesondere solche mit 1 bis 8 Kohlenstoffen im Alkylrest, wie beispielsweise Methyl- und Butylglucosid;
- Zuckeralkohole mit 5 bis 12 Kohlenstoffatomen, wie beispielsweise Sorbit oder Mannit,
- Zucker mit 5 bis 12 Kohlenstoffatomen, wie beispielsweise Glucose oder Saccharose;
- Aminozucker, wie beispielsweise Glucamin.

Als **Konservierungsmittel** eignen sich beispielsweise Phenoxyethanol, Formaldehydlösung, Parabene, Pentandiol oder Sorbinsäure sowie die in Anlage 6, Teil A und B der Kosmetikverordnung aufgeführten weiteren Stoffklassen. Als **Insekten-Repellentien** kommen N,N-Diethyl-m-touluamid, 1,2-Pentandiol oder Insekten-Repellent 3535 in Frage, als **Selbstbräuner** eignet sich Dihydroxyaceton.

Als **Parfümöle** seien genannt Gemische aus natürlichen und synthetischen Riechstoffen. Natürliche Riechstoffe sind Extrakte von Blüten (Lilie, Lavendel, Rosen, Jasmin, Neroli, Ylang-Ylang), Stengeln und Blättern (Geranium, Patchouli, Petitgrain), Früchten (Anis, Koriander, Kümmel, Wacholder), Fruchtschalen (Bergamotte, Zitrone, Orangen), Wurzeln (Macis, Angelica, Sellerie, Kardamon, Costus, Iris, Calmus), Hölzern (Pinien-, Sandel-, Guajak-, Zedern-, Rosenholz), Kräutern und Gräsern (Estragon, Lemongras, Salbei, Thymian), Nadeln und Zweigen (Fichte, Tanne, Kiefer, Latschen), Harzen und Balsamen (Galbanum, Elemi, Benzoe, Myrrhe, Olibanum, Opoponax). Weiterhin kommen tierische Rohstoffe in Frage, wie beispielsweise Zibet und Castoreum. Typische synthetische Riechstoffverbindungen sind Produkte vom Typ der Ester, Ether, Aldehyde, Ketone, Alkohole und Kohlenwasserstoffe. Riechstoffverbindungen vom Typ der Ester sind z.B. Benzylacetat, Phenoxyethylisobutyrat, p-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Ethem zählen beispielsweise Benzylethylether, zu den Aldehyden z.B. die linearen Alkanale mit 8 bis 18 Kohlenstoffatomen, Citral, Citronellal, Citronellyloxyacetaldehyd, Cyclamenaldehyd, Hydroxycitronellal, Lilial und Bourgeonal, zu den Ketonen z.B. die Jonone, α-Isomethylionon und Methylcedrylketon, zu den Alkoholen Anethol, Citronellol, Eugenol, Isoeugenol, Geraniol, Linalool, Phenylethylalkohol und Terpineol, zu den Kohlenwasserstoffen gehören hauptsächlich die Terpene und Balsame. Bevorzugt werden jedoch Mischungen verschiedener Riechstoffe verwendet, die gemeinsam eine ansprechende Duftnote erzeugen. Auch ätherische Öle geringerer Flüchtigkeit, die meist als Aromakomponenten verwendet werden, eignen sich als Parfümöle, z.B. Salbeiöl, Kamillenöl, Nelkenöl, Melissenöl, Minzenöl, Zimtblätteröl, Lindenblütenöl, Wacholderbeerenöl, Vetiveröl, Olibanöl, Galbanumöl, Labolanumöl und Lavandinöl. Vorzugsweise werden Bergamotteöl, Dihydromyrcenol, Lilial, Lyral, Citronellol, Phenylethylalkohol, α-Hexylzimtaldehyd, Geraniol, Benzylaceton, Cyclamenaldehyd, Linalool, Boisambrene Forte, Ambroxan, Indol, Hedione, Sandelice, Citronenöl, Mandarinenöl, Orangenöl, Allylamylglycolat, Cyclovertal, Lavandinöl, Muskateller Salbeiöl, β-Damascone, Geraniumöl Bourbon, Cyclohexylsalicylat, Vertofix Coeur, Iso-E-Super, Fixolide NP, Evemyl, Iraldein gamma, Phenylessigsäure, Geranylacetat, Benzylacetat, Rosenoxid, Romilllat, Irotyl und Floramat allein oder in Mischungen, eingesetzt.

Als **Farbstoffe** können die für kosmetische Zwecke geeigneten und zugelassenen Substanzen verwendet werden, wie sie beispielsweise in der Publikation **"Kosmetische Färbemittel" der Farbstoffkommission der Deutschen Forschungsgemeinschaft, Verlag Chemie, Weinheim, 1984, S.81-106** zusammengestellt sind. Diese Farbstoffe werden üblicherweise in Konzentrationen von 0,001 bis 0,1 Gew.-%, bezogen auf die gesamte Mischung, eingesetzt.

### Wasch- und Reinigungsmittel

Die Wasch- und Reinigungsmittel können neben den oben genannten noch weitere typische Inhaltsstoffe, wie beispielsweise anionische und nichtionische Tenside, Builder, Bleichmittel, Bleichaktivatoren, Waschkraftverstärker, Enzyme, Enzymstabilisatoren, Vergrauungsinhibitoren, optische Aufheller, Soil repellants, Schauminhibitoren, Viskositätsregulatoren, Lösungsvermittler, Desinfektionsmittel, Korrosionsinhibitoren, Komplexbildner sowie anorganische Salze enthalten.

Typische Beispiele für **anionische Tenside** sind Seifen, Alkylbenzolsulfonate, Alkansulfonate, Olefinsulfonate, Alkylethersulfonate, Glycerinethersulfonate, α-Methylestersulfonate, Sulfofettsäuren, Alkylsulfate, Fettalkoholethersulfate, Glycerinethersulfate, Fettsäureethersulfate, Hydroxymischethersulfate, Monoglycerid(ether)sulfate, Fettsäureamid(ether)sulfate, Mono- und Dialkylsulfosuccinate, Mono- und Dialkylsulfosuccinamate, Sulfotriglyceride, Amidseifen, Ethercarbonsäuren und deren Salze, Fettsäureisethionate, Fettsäuresarcosinate, Fettsäuretauride, N-Acylaminosäuren, wie beispielsweise Acyllactylate, Acyltartrate, Acylglutamate und Acylaspartate, Alkyloligoglucosidsulfate, Proteinfettsäurekondensate (insbesondere pflanzliche Produkte auf Weizenbasis) und Alkyl(ether)phosphate. Sofern die anionischen Tenside Polyglycoletherketten enthalten, können diese eine konventionelle, vorzugsweise jedoch eine eingeengte Homologenverteilung aufweisen. Typische Beispiele für **nichtionische Tenside** sind Fett-alkoholpolyglycolether, Alkylphenolpolyglycolether, Fettsäurepolyglycolester, Fettsäureamidpolyglycolether, Fettaminpolyglycolether, alkoxylierte Triglyceride, Mischether bzw. Mischformale, gegebenenfalls partiell oxidierte Alk(en)yloligoglykoside bzw. Glucoronsäurederivate, Fettsäure-N-alkylglucamide, Proteinhydrolysate (insbesondere pflanzliche Produkte auf Weizenbasis), Polyolfettsäureester, Zuckerester, Sorbitanester, Polysorbate und Aminoxide. Sofern die nichtionischen Tenside Polyglycoletherketten enthalten, können diese eine konventionelle, vorzugsweise jedoch eine eingeengte Homologenverteilung aufweisen. Bei den genannten Tensiden handelt es sich ausschließlich um bekannte Verbindungen. Hinsichtlich Struktur und Herstellung dieser Stoffe sei auf einschlägige Übersichtsarbeiten beispielsweise **J.Falbe (ed.), "Surfactants in Consumer Products", Springer Verlag, Berlin, 1987, S. 54-124 oder J.Falbe (ed.), "Katalysatoren, Tenside und Mineralöladditive", Thieme Verlag, Stuttgart, 1978, S. 123-217** verwiesen.

Als feste **Builder** wird insbesondere feinkristalliner, synthetisches und gebundenes Wasser enthaltender Zeolith wie Zeolith NaA in Waschmittelqualität eingesetzt. Geeignet sind jedoch auch Zeolith NaX sowie Mischungen aus NaA und NaX. Der Zeolith kann als sprühgetrocknetes Pulver oder auch als ungetrocknete, von ihrer Herstellung noch feuchte, stabilisierte Suspension zum Einsatz kommen. Für den Fall, daß der Zeolith als Suspension eingesetzt wird, kann diese geringe Zusätze an nichtionischen Tensiden als Stabilisatoren enthalten, beispielsweise 1 bis 3 Gew.-%, bezogen auf Zeolith, an ethoxylierten C₁₂-C₁₈-Fettalkoholen mit 2 bis 5 Ethylenoxidgruppen oder ethoxylierte Isotridecanole. Geeignete Zeolithe weisen eine mittlere Teilchengröße von weniger als 10 pm (Volumenverteilung; Meßmethode: Coulter Counter) auf und enthalten vorzugsweise 18 bis 22, insbesondere 20 bis 22 Gew.-% an gebundenem Wasser. Geeignete Substitute bzw. Teilsubstitute für Zeolithe sind kristalline, schichtförmige Natriumsilicate der allgemeinen Formel NaMSiₓO₂ₓ₊₁·yH₂O, wobei M Natrium oder Wasserstoff bedeutet, x eine Zahl von 1,9 bis 4 und y eine Zahl von 0 bis 20 ist und bevorzugte Werte für x 2, 3 oder 4 sind. Derartige kristalline Schichtsilicate werden beispielsweise in der europäischen Patentanmeldung **EP 0164514 A** beschrieben. Bevorzugte kristalline Schichtsilicate sind solche, in denen M in der allgemeinen Formel für Natrium steht und x die Werte 2 oder 3 annimmt. Insbesondere sind sowohl β- als auch γ-Natriumdisilicate Na₂Si₂O₅·yH₂O bevorzugt, wobei β-Natriumdisilicat beispielsweise nach dem Verfahren erhalten werden kann, das in der internationalen Patentanmeldung **WO 91/08171** beschrieben ist. Die erfindungsgemäßen Pulverwaschmittel enthalten als feste Builder vorzugsweise 10 bis 60 Gew.-% Zeolith und/oder kristalline Schichtsilicate, wobei Mischungen von Zeolith und kristallinen Schichtsilicaten in einem beliebigen Verhältnis besonders vorteilhaft sein können. Insbesondere ist es bevorzugt, daß die Mittel 20 bis 50 Gew.-% Zeolith und/oder kristalline Schichtsilicate enthalten. Besonders bevorzugte Mittel enthalten bis 40 Gew.-% Zeolith und insbesondere bis 35 Gew.-% Zeolith, jeweils bezogen auf wasserfreie Aktivsubstanz. Weitere geeignete Inhaltsstoffe der Mittel sind wasserlösliche amorphe Silicate; vorzugsweise werden sie in Kombination mit Zeolith und/oder kristallinen Schichtsilicaten eingesetzt. Insbesondere bevorzugt sind dabei Mittel, welche vor allem Natriumsilicat mit einem molaren Verhältnis (Modul) Na₂O : SiO₂ von 1:1 bis 1:4,5, vorzugsweise von 1:2 bis 1:3,5, enthalten. Der Gehalt der Mittel an amorphen Natriumsilicaten beträgt dabei vorzugsweise bis 15 Gew.-% und vorzugsweise zwischen 2 und 8 Gew.-%. Auch Phosphate wie Tripolyphosphate, Pyrophosphate und Orthophosphate können in geringen Mengen in den Mitteln enthalten sein. Vorzugsweise beträgt der Gehalt der Phosphate in den Mitteln bis 15 Gew.-%, jedoch insbesondere 0 bis 10 Gew.-%. Außerdem können die Mittel auch zusätzlich Schichtsilicate natürlichen und synthetischen Ursprungs enthalten. Derartige Schichtsilicate sind beispielsweise aus den Patentanmeldungen **DE 2334899 B, EP 0026529 A** und **DE 3526405 A** bekannt. Ihre Verwendbarkeit ist nicht auf eine spezielle Zusammensetzung bzw. Strukturformel beschränkt. Bevorzugt sind hier jedoch Smectite, insbesondere Bentonite. Geeignete Schichtsilicate, die zur Gruppe der mit Wasser quellfähigen Smectite zählen, sind z.B. solche der allgemeinen Formeln

(OH)₄Si_{8-y}Al_{y}(MgₓAl₄₋ₓ)O₂₀ Montmorrilonit

(OH)₄Si_{8-y}Al_{y}(Mg_{6-z}Li_{z})O₂₀ Hectorit

(OH)₄Si_{8-y}Al_{y}(Mg_{6-z} Al_{z})O₂₀ Saponit

mit x = 0 bis 4, y = 0 bis 2, z = 0 bis 6. Zusätzlich kann in das Kristallgitter der Schichtsilicate gemäß den vorstehenden Formeln geringe Mengen an Eisen eingebaut sein. Femer können die Schichtsilicate aufgrund ihrer ionenaustauschenden Eigenschaften Wasserstoff-, Alkali-, Erdalkaliionen, insbesondere Na⁺ und Ca²⁺ enthalten. Die Hydratwassermenge liegt meist im Bereich von 8 bis 20 Gew.-% und ist vom Quellzustand bzw. von der Art der Bearbeitung abhängig. Brauchbare Schichtsilicate sind beispielsweise aus **US 3,966,629, US 4,062,647, EP 0026529 A** und **EP 0028432 A** bekannt. Vorzugsweise werden Schichtsilicate verwendet, die aufgrund einer Alkalibehandlung weitgehend frei von Calciumionen und stark färbenden Eisenionen sind. Brauchbare organische Gerüstsubstanzen sind beispielsweise die bevorzugt in Form ihrer Natriumsalze eingesetzten Polycarbonsäuren, wie Citronensäure, Adipinsäure, Bemsteinsäure, Glutarsäure, Weinsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen. Geeignete polymere Polycarboxylate sind beispielsweise die Natriumsalze der Polyacrylsäure oder der Polymethacrylsäure, beispielsweise solche mit einer relativen Molekülmasse von 800 bis 150000 (auf Säure bezogen). Geeignete copolymere Polycarboxylate sind insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 5000 bis 200000, vorzugsweise 10000 bis 120000 und insbesondere 50000 bis 100000. Der Einsatz polymerer Polycarboxylate ist nicht zwingend erforderlich. Falls jedoch polymere Polycarboxylate eingesetzt werden, so sind Mittel bevorzugt, welche biologisch abbaubare Polymere, beispielsweise Terpolymere, die als Monomere Acrylsäure und Maleinsäure bzw. deren Salze sowie Vinylalkohol bzw. Vinylalkohol-Derivate oder die als Monomere Acrylsäure und 2-Alkylallylsulfonsäure bzw. deren Salze sowie Zuckerderivate enthalten. Insbesondere sind Terpolymere bevorzugt, die nach der Lehre der deutschen Patentanmeldungen **DE 4221381 A** und **DE 4300772 A** erhalten werden. Weitere geeignete Buildersubstanzen sind Polyacetale, welche durch Umsetzung von Dialdehyden mit Polyolcarbonsäuren, welche 5 bis 7 Kohlenstoffatome und mindestens 3 Hydroxylgruppen aufweisen, beispielsweise wie in der europäischen Patentanmeldung **EP 0280223 A** beschrieben erhalten werden können. Bevorzugte Polyacetale werden aus Dialdehyden wie Glyoxal, Glutaraldehyd,

Terephthalaldehyd sowie deren Gemischen und aus Polyolcarbonsäuren wie Gluconsäure und/oder Glucoheptonsäure erhalten.
Unter den als **Bleichmittel** dienenden, in Wasser Wasserstoffperoxid liefernden Verbindungen haben das Natriumperborat-Tetrahydrat und das Natriumperborat-Monohydrat eine besondere Bedeutung. Weitere Bleichmittel sind beispielsweise Peroxycarbonat, Citratperhydrate sowie Salze der Persäuren, wie Perbenzoate, Peroxyphthalate oder Diperoxydodecandisäure. Sie werden üblicherweise in Mengen von 8 bis 25 Gew.-% eingesetzt. Bevorzugt ist der Einsatz von Natriumperborat-Monohydrat in Mengen von 10 bis 20 Gew.-% und insbesondere von 10 bis 15 Gew.-%. Durch seine Fähigkeit, unter Ausbildung des Tetrahydrats freies Wasser binden zu können, trägt es zur Erhöhung der Stabilität des Mittels bei.

Um beim Waschen bei Temperaturen von 60°C und darunter eine verbesserte Bleichwirkung zu erreichen, können **Bleichaktivatoren** in die Präparate eingearbeitet werden. Beispiele hierfür sind mit Wasserstoffperoxid organische Persäuren bildende N-Acyl- bzw. O-Acyl-Verbindungen, vorzugsweise N,N'-tetraacylierte Diamine, ferner Carbonsäureanhydride und Ester von Polyolen wie Glucosepentaacetat. Der Gehalt der bleichmittelhaltigen Mittel an Bleichaktivatoren liegt in dem üblichen Bereich, vorzugsweise zwischen 1 und 10 Gew.-% und insbesondere zwischen 3 und 8 Gew.-%. Besonders bevorzugte Bleichaktivatoren sind N,N,N',N'-Tetraacetylethylendiamin und 1,5-Diacetyl-2,4-dioxo-hexahydro-1,3,5-triazin.

Als **Enzyme** kommen solche aus der Klasse der Proteasen, Lipasen, Amylasen, Cellulasen bzw. deren Gemische in Frage. Besonders gut geeignet sind aus Bakterienstämmen oder Pilzen, wie Bacillus subtilis, Bacillus licheniformis und Streptomyces griseus gewonnene enzymatische Wirkstoffe. Vorzugsweise werden Proteasen vom Subtilisin-Typ und insbesondere Proteasen, die aus Bacillus lentus gewonnen werden, eingesetzt. Ihr Anteil kann etwa 0,2 bis etwa 2 Gew.-% betragen. Die Enzyme können an Trägerstoffen adsorbiert und/oder in Hüllsubstanzen eingebettet sein, um sie gegen vorzeitige Zersetzung zu schützen. Zusätzlich zu den mono- und polyfunktionellen Alkoholen und den Phosphonaten können die Mittel weitere Enzymstabilisatoren enthalten. Beispielsweise können 0,5 bis 1 Gew.-% Natriumformiat eingesetzt werden. Möglich ist auch der Einsatz von Proteasen, die mit löslichen Calciumsalzen und einem Calciumgehalt von vorzugsweise etwa 1,2-Gew.-%, bezogen auf das Enzym, stabilisiert sind. Besonders vorteilhaft ist jedoch der Einsatz von Borverbindungen, beispielsweise von Borsäure, Boroxid, Borax und anderen Alkalimetallboraten wie den Salzen der Orthoborsäure (H₃BO₃), der Metaborsäure (HBO₂) und der Pyroborsäure (Tetraborsäure H₂B₄O₇).

**Vergrauungsinhibitoren** haben die Aufgabe, den von der Faser abgelösten Schmutz in der Flotte suspendiert zu halten und so das Vergrauen zu verhindern. Hierzu sind wasserlösliche Kolloide meist organischer Natur geeignet, beispielsweise die wasserlöslichen Salze polymerer Carbonsäuren, Leim, Gelatine, Salze von Ethercarbonsäuren oder Ethersulfonsäuren der Stärke oder der Cellulose oder Salze von sauren Schwefelsäureestem der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, z.B. abgebaute Stärke, Aldehydstärken usw.. Auch Polyvinylpyrrolidon ist brauchbar. Bevorzugt werden jedoch Celluloseether, wie Carboxymethylcellulose, Methylcellulose, Hydroxyalkylcellulose und Mischether, wie Methylhydroxyethylcellulose, Methylhydroxypropylcellulose, Methylcarboxymethylcellulose und deren Gemische sowie Polyvinylpyrrolidon, beispielsweise in Mengen von 0,1 bis 5 Gew.-%, bezogen auf die Mittel.

Die Mittel können als **optische Aufheller** Derivate der Diaminostilbendisulfonsäure bzw. deren Alkalimetallsalze enthalten. Geeignet sind z.B. Salze der 4,4'-Bis(2-anilino-4-morpholino-1,3,5-triazinyl-6-amino)stilben-2,2'-disulfonsäure oder gleichartig aufgebaute Verbindungen, die anstelle der Morpholino-Gruppe eine Diethanolaminogruppe, eine Methylaminogruppe, eine Anilinogruppe oder eine 2-Methoxyethylaminogruppe tragen. Weiterhin können Aufheller vom Typ der substituierten Diphenylstyryle anwesend sein, z.B. die Alkalisalze des 4,4'-Bis(2-sulfostyryl)-diphenyls, 4,4'-Bis(4-chlor-3-sulfostyryl)-diphenyls, oder 4-(4-Chlorstyryl)-4'-(2-sulfostyryl)-diphenyls. Auch Gemische der vorgenannten Aufheller können verwendet werden. Einheitlich weiße Granulate werden erhalten, wenn die Mittel außer den üblichen Aufhellern in üblichen Mengen, beispielsweise zwischen 0,1 und 0,5 Gew.-%, vorzugsweise zwischen 0,1 und 0,3 Gew.-%, auch geringe Mengen, beispielsweise 10⁻⁶ bis 10⁻³ Gew.-%, vorzugsweise um 10⁻⁵ Gew.-%, eines blauen Farbstoffs enthalten. Ein besonders bevorzugter Farbstoff ist Tinolux® (Handelsprodukt der Ciba-Geigy).

Als schmutzabweisenden Polymere ("**soil repellants**") kommen solche Stoffe in Frage, die vorzugsweise Ethylenterephthalat- und/oder Polyethylenglycolterephthalatgruppen enthalten, wobei das Molverhältnis Ethylenterephthalat zu Polyethylenglycolterephthalat im Bereich von 50 : 50 bis 90 : 10 liegen kann. Das Molekulargewicht der verknüpfenden Polyethylenglycoleinheiten liegt insbesondere im Bereich von 750 bis 5000, d.h., der Ethoxylierungsgrad der Polyethylenglycolgruppenhaltigen Polymere kann ca. 15 bis 100 betragen. Die Polymeren zeichnen sich durch ein durchschnittliches Molekulargewicht von etwa 5000 bis 200.000 aus und können eine Block-, vorzugsweise aber eine Random-Struktur aufweisen. Bevorzugte Polymere sind solche mit Molverhältnissen Ethylenterephthalat/Polyethylenglycolterephthalat von etwa 65 : 35 bis etwa 90 : 10, vorzugsweise von etwa 70 : 30 bis 80 : 20. Weiterhin bevorzugt sind solche Polymeren, die verknüpfende Polyethylenglycoleinheiten mit einem Molekulargewicht von 750 bis 5000, vorzugsweise von 1000 bis etwa 3000 und ein Molekulargewicht des Polymeren von etwa 10.000 bis etwa 50.000 aufweisen. Beispiele für handelsübliche Polymere sind die Produkte Milease® T (ICI) oder Repelotex® SRP 3 (Rhöne-Poulenc).

Beim Einsatz in maschinellen Waschverfahren kann es von Vorteil sein, den Mitteln übliche **Schauminhibitoren** zuzusetzen. Hierfür eignen sich beispielsweise Seifen natürlicher oder synthetischer Herkunft, die einen hohen Anteil an C₁₈-C₂₄-Fettsäuren aufweisen. Geeignete nichttensidartige Schauminhibitoren sind beispielsweise Organopolysiloxane und deren Gemische mit mikrofeiner, gegebenenfalls silanierter Kieselsäure sowie Paraffine, Wachse, Mikrokristallinwachse und deren Gemische mit silanierter Kieselsäure oder Bistearylethylendiamid. Mit Vorteilen werden auch Gemische aus verschiedenen Schauminhibitoren verwendet, z.B. solche aus Silikonen, Paraffinen oder Wachsen. Vorzugsweise sind die Schauminhibitoren, insbesondere silikon- oder paraffinhaltige Schauminhibitoren, an eine granulare, in Wasser lösliche bzw. dispergierbare Trägersubstanz gebunden. Insbesondere sind dabei Mischungen aus Paraffinen und Bistearylethylendiamiden bevorzugt.

Als **Viskositätsregulatoren** können beispielsweise gehärtetes Rizinusöl, Salze von langkettigen Fettsäuren, die vorzugsweise in Mengen von 0 bis 5 Gew.-% und insbesondere in Mengen von 0,5 bis 2 Gew.-%, beispielsweise Natrium-, Kalium-, Aluminium-, Magnesium- und Titanstearate oder die Natrium- und/oder Kaliumsalze der Behensäure, sowie weitere polymere Verbindungen eingesetzt werden. Zu den letzteren gehören bevorzugt Polyvinylpyrrolidon, Urethane und die Salze polymerer Polycarboxylate, beispielsweise homopolymerer oder copolymerer Polyacrylate, Polymethacrylate und insbesondere Copolymere der Acrylsäure mit Maleinsäure, vorzugsweise solche aus 50 % bis 10 % Maleinsäure. Die relative Molekülmasse der Homopolymeren liegt im allgemeinen zwischen 1000 und 100000, die der Copolymeren zwischen 2000 und 200000, vorzugsweise zwischen 50000 bis 120000, bezogen auf die freie Säure. Insbesondere sind auch wasserlösliche Polyacrylate geeignet, die beispielsweise mit etwa 1 % eines Polyallylethers der Sucrose quervernetzt sind und die eine relative Molekülmasse oberhalb einer Million besitzen. Beispiele hierfür sind die unter dem Namen Carbopol® 940 und 941 erhältlichen Polymere mit verdickender Wirkung. Die quervernetzten Polyacrylate werden vorzugsweise in Mengen nicht über 1 Gew.-%, vorzugsweise in Mengen von 0,2 bis 0,7 Gew.-% eingesetzt. Die Mittel können zusätzlich etwa 5 bis 20 Gew.-% eines partiell veresterten Copolymerisats enthalten, wie es in der europäischen Patentanmeldung **EP 0367049 A** beschrieben ist. Diese partiell veresterten Polymere werden durch Copolymerisation von (a) mindestens einem C₄-C₂₈-Olefin oder Mischungen aus mindestens einem C₄-C₂₈-Olefin mit bis zu 20 Mol-% C₁-C₂₈-Alkylvinylethern und (b) ethylenisch ungesättigten Dicarbonsäureanhydriden mit 4 bis 8 Kohlenstoffatomen im Molverhältnis 1 : 1 zu Copolymerisaten mit K-Werten von 6 bis 100 und anschließende partielle Veresterung der Copolymerisate mit Umsetzungsprodukten wie C₁-C₁₃-Alkoholen, C₈-C₂₂-Fettsäuren, C₁-C₁₂-Alkylphenolen, sekundären C₂-C₃₀-Aminen oder deren Mischungen mit mindestens einem C₂-C₄-Alkylenoxid oder Tetrahydrofuran sowie Hydrolyse der Anhydridgruppen der Copolymerisate zu Carboxylgruppen erhalten, wobei die partielle Veresterung der Copolymerisate soweit geführt wird, daß 5 bis 50 % der Carboxylgruppen der Copolymerisate verestert sind. Bevorzugte Copolymerisate enthalten als ethylenisch ungesättigtes Dicarbonsäureanhydrid Maleinsäureanhydrid. Die partiell veresterten Copolymerisate können entweder in Form der freien Säure oder vorzugsweise in partiell oder vollständig neutralisierter Form vorliegen. Vorteilhafterweise werden die Copolymerisate in Form einer wäßrigen Lösung, insbesondere in Form einer 40 bis 50 Gew.-%igen Lösung eingesetzt. Die Copolymerisate leisten nicht nur einen Beitrag zur Primär- und Sekundärwaschleistung des flüssigen Wasch- und Reinigungsmittels, sondern bewirken auch eine gewünschte Viskositätsemiedrigung der konzentrierten flüssigen Waschmittel. Durch den Einsatz dieser partiell veresterten Copolymerisate werden konzentrierte wäßrige Flüssigwaschmittel erhalten, die unter dem alleinigen Einfluß der Schwerkraft und ohne Einwirkung sonstiger Scherkräfte fließfähig sind. Vorzugsweise beinhalten die konzentrierten wäßrigen Flüssigwaschmittel partiell veresterte Copolymerisate in Mengen von 5 bis 15 Gew.-% und insbesondere in Mengen von 8 bis 12 Gew.-%.

### Beispiele

Die mikrobizide Wirksamkeit der erfindungsgemäß verwendeten Betainester wurde gegenüber folgenden Testkeimen ermittelt:
a) *Staphylococcus aureus*
b) *Enterococcus faecium*
*c) Pseudomonas aeruginosa*
*d) Escherichia coli*
*e) Salmonella Enteritidis*
*f) Mycobacterium smegmatis*
*g) Candida albicans*
*h) Trichophyton mentagrophytes*
*i) Microsporum gypseum*
*j) Aspergillus niger*

Die Wirksamkeit der Testverbindungen (Tabelle 1) gegenüber den verschiedenen Testkeimen wurde mit Hilfe des Suspensionstests nach einer Prüfmethode der DGHM (Deutsche Gesellschaft für Hygiene und Mikrobiologie) bestimmt. Unter Verwendung von Wasser einer Härte von 17°dH sowie ggf. von Isopropanol wurden Testlösungen hergestellt, die unterschiedliche Mengen an Betainestem (vgl. Tabellen 2 bis 31) enthielten.
Bei Raumtemperatur wurden jeweils 0,1 ml Testkeimsuspension in Reagenzgläser mit jeweils 10 ml der oben beschriebenen Testlösungen pipettiert und vermischt. Nach unterschiedlichen Einwirkzeiten von 5, 15, 60 und 240 Minuten wurden den Reagenzgläsern mit Hilfe einer Pipette 1 ml Material entnommen, und in 9 ml Inaktivatorlösung (Inaktivatorsubstanzen: 3,0 % Tween, 0,3 % Leuthin, 0,1 % Histidin) übertragen. Nach mindestens 5 und längstens 30 Minuten Inaktivierung erfolgte die Bestimmung der Lebendkeimzahl durch Ausplattierung auf CaSo-Agarplatten. Unter Verwendung eines Spiralplaters wurde direkt der Inaktivierungsansatz auf CaSo-Agar ausplattiert. Die Proben wurden 24 bis 72 Stunden bei 37 °C inkubiert, anschließend makroskopisch auf Wachstum beurteilt und auf diesem Weg die Abtötungszeit oder der Restkeimgehalt ermittelt. Dabei wird die Keimzahl einer unbehandelten Wasserkontrolle in das Verhältnis zur Keimzahl der inaktivierten Testlösung unter Berücksichtigung der Verdünnung gestellt. In der nachfolgenden Tabellen 2 bis 31 sind die logarithmischen Abtötungsfaktoren angegeben, d.h. die Zehnerpotenzreduktion. Dabei gilt, je höher der Wert ist, desto besser ist die mikrobizide Wirkung. Die Angabe < bedeutet, daß der logarithmische Reduktionsfaktor unter dem angegebenen Wert bzw. bei der Angabe > über dem angegebenen Wert liegt.
Die eingesetzten Testverbindungen zeigen, wie aus den Tabellen 2 bis 31 hervorgeht, eine mikrobizide Wirksamkeit gegenüber nahezu allen verwendeten Testkeimen.

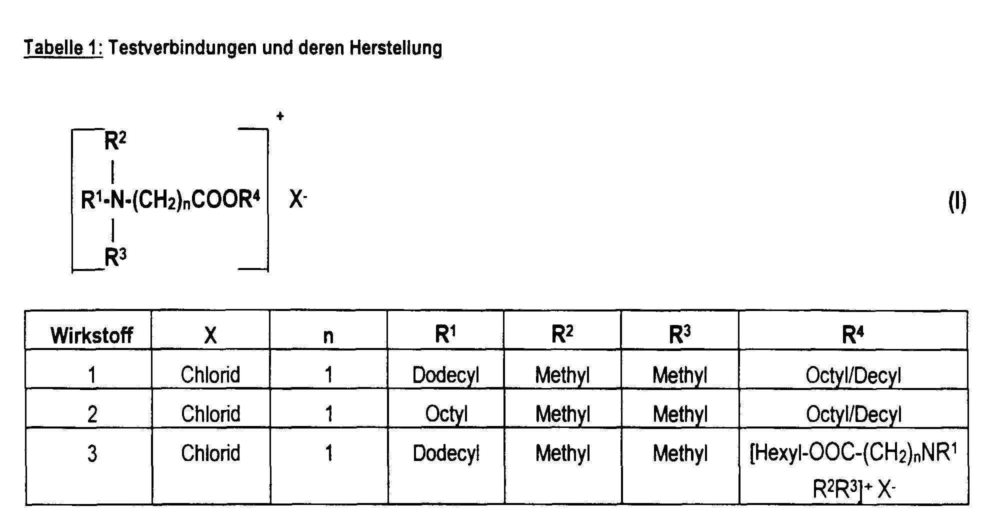

### 1. Herstellung des Wirkstoffs 1

In einen 2l-Mehrhalsglaskolben, der mit einem Rührer, einem Thermometer und einem Wasserabscheider nach Dean Stark mit aufgesetztem Rückflußkühler ausgerüstet war, wurden 362,9 g (2,5 Mol) einer Mischung aus n-Octyl- und n-Decylalkohol (Hydroxylzahl = 238,5), 238,6 g (2,5 Mol) Monochloressigsäure und 300 ml Toluol vorgelegt. Unter mäßiger Überleitung von Stickstoff wurde das Reaktionsgemisch solange zum Rückfluß (10 Stunden, 140 °C) erhitzt, bis 2,5 Mol Wasser abgetrennt waren.

Von der nahezu farblosen toluolischen Lösung wurden 159,0 g (enthaltend ca. 0,5 Mol des gebildeten Esters) in einem 0,5l-Glaskolben, ausgerüstet mit Rührer, Thermometer, Rückflußkühler und Tropftrichter, vorgelegt und bei 80 °C innerhalb von 30 Minuten mit 109,2 g (0,5 Mol) n-Dodecyldimethylamin (6,42 % titrierbarer Stickstoff) versetzt. Danach wurde solange bei der genannten Temperatur gerührt (ca. 6 Stunden), bis aufgrund einer Quatemierungsreaktion nahezu sämtlicher aminischer Stickstoff verbraucht war (Titration mit Perchlorsäure in essigsaurer Lösung) und das gesamte Chlor in ionogener Form vorlag (Titration gegen eine Cl⁻-sensitive Elektrode). Bei einem Unterdruck von 15 mbar wurde anschließend bis zu einer Temperatur von 60 °C das Toluol abdestilliert und der Rückstand (221 g) mit Wasser zu einer viskosen, 40 %igen Lösung verdünnt.

### 2. Herstellung des Wirkstoffs 2

Wie unter 1. beschrieben wurden 159,0 g der toluolischen Lösung vorgelegt und bei 80 °C innerhalb 30 Minuten mit 78,7 g (0,5 Mol) n-Octyldimethylamin (8,9 % titrierbarer Stickstoff) versetzt. Die Reaktions-bedingungen incl. der analytischen Begleitung entsprachen ebenfalls dem Herstellbeispiel für Wirkstoff eins. Der nach der Entfernung des Toluols verbliebene Rückstand (195 g) wurde mit Wasser zu einer viskosen, 50 %igen Lösung verdünnt.

### 3. Herstellung des Wirkstoffs 3

Gemäß den unter 1. beschriebenen Bedingungen wurden 238,7 g (2,0 Mol) 1,6-Hexandiol, 381,8 g (4,0 Mol) Monochloressigsäure und 300 ml Toluol solange zum Rückfluß (11 Stunden, 136 °C) erhitzt, bis 4,0 Mol Reaktionswasser abgetrennt waren. Die leicht getrübte, nahezu farblose Lösung wurde zunächst über ein Faltenfilter gegeben. 157,6 g (enthaltend ca. 0,4 Mol des gebildeten Bis-Esters) der nun klaren Lösung wurden in einer Apparatur entsprechend den vorherigen Beispielen mit 174,8 g (0,8 Mol) n-Dodecyldimethylamin (6,42 % titrierbarer Stickstoff) unter vergleichbaren Bedingungen umgesetzt. Der nach der Entfernung des Toluols verbliebene Rückstand (285 g) wurde mit Wasser zu einer viskosen, 50 %igen Lösung verdünnt.

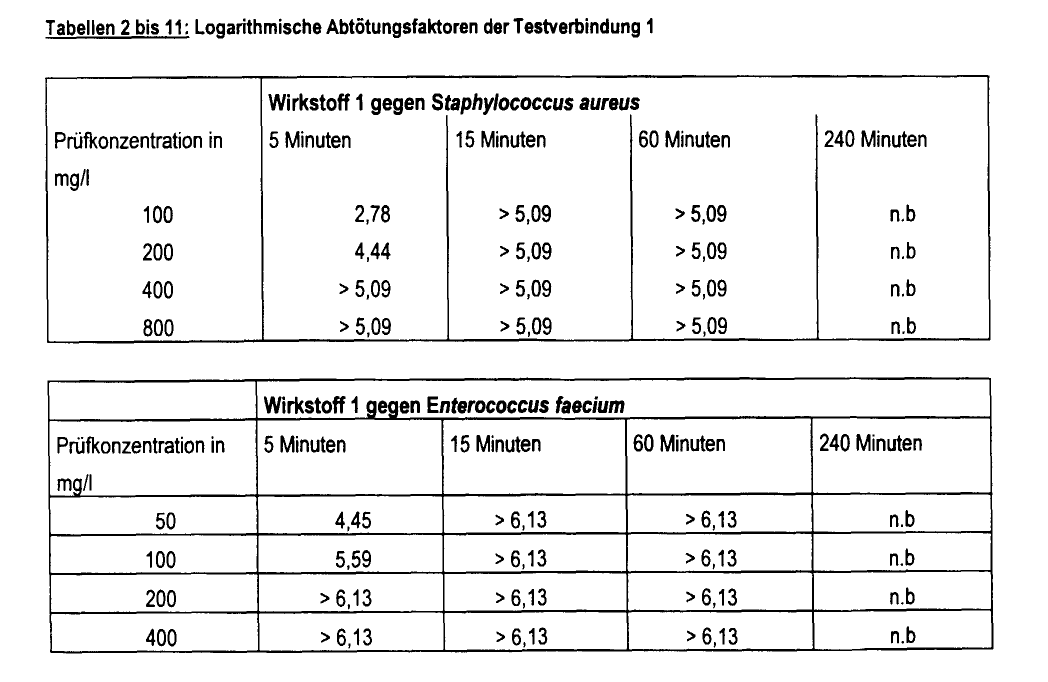

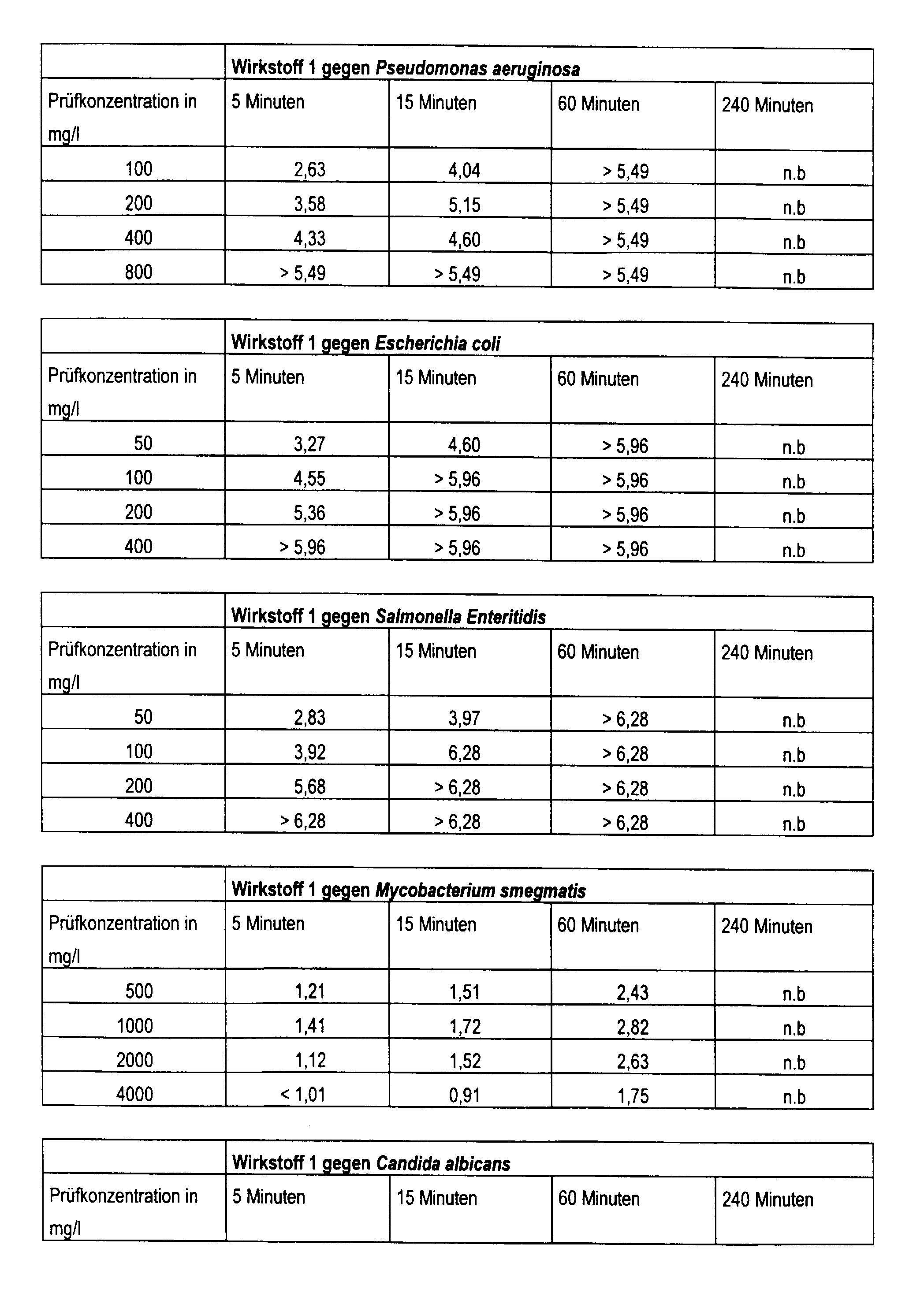

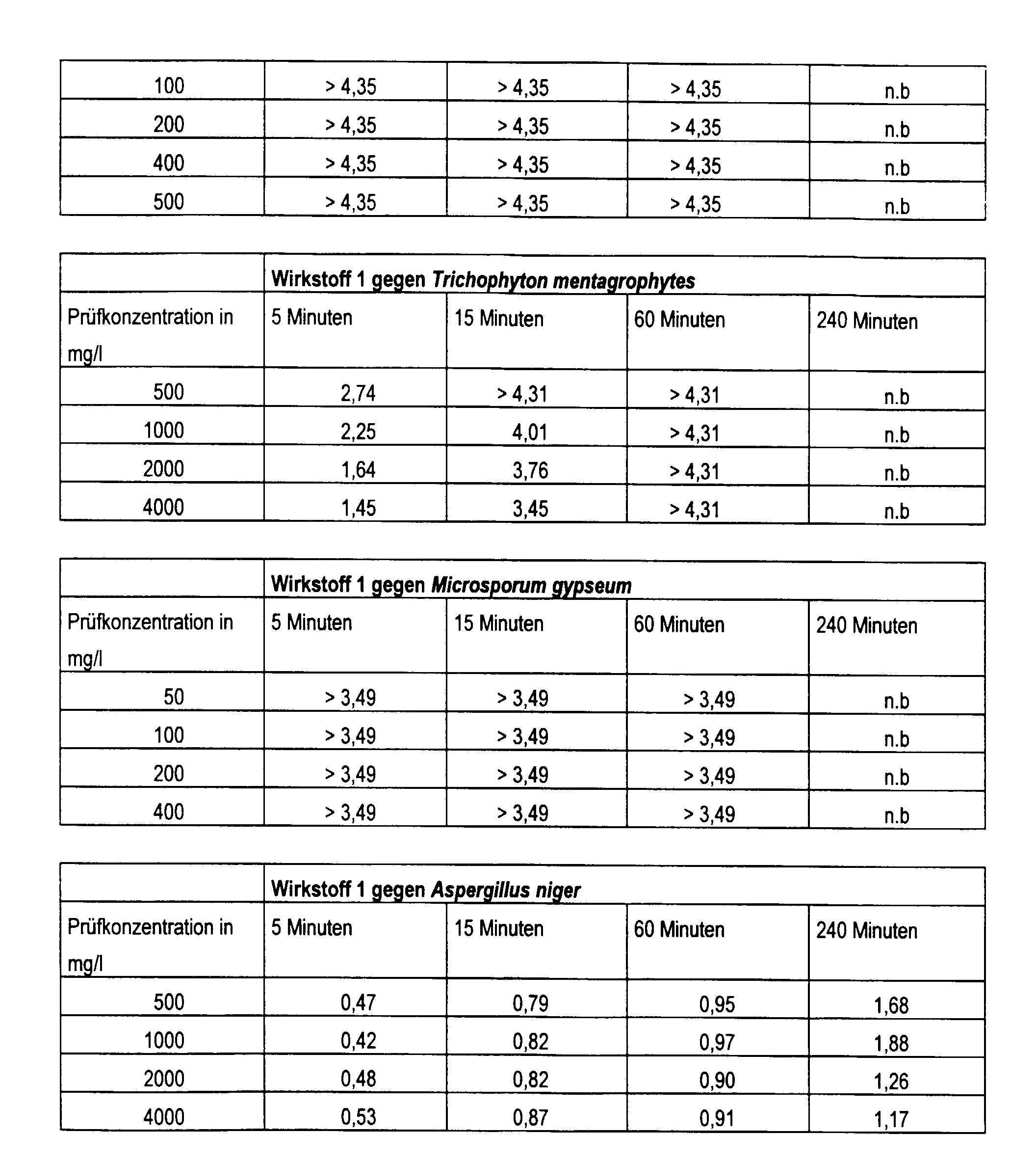

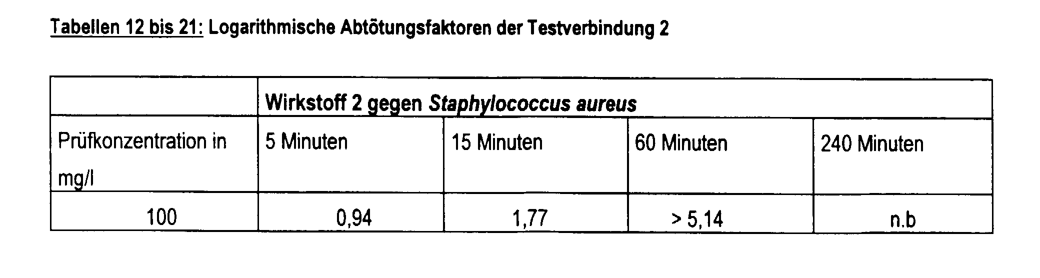

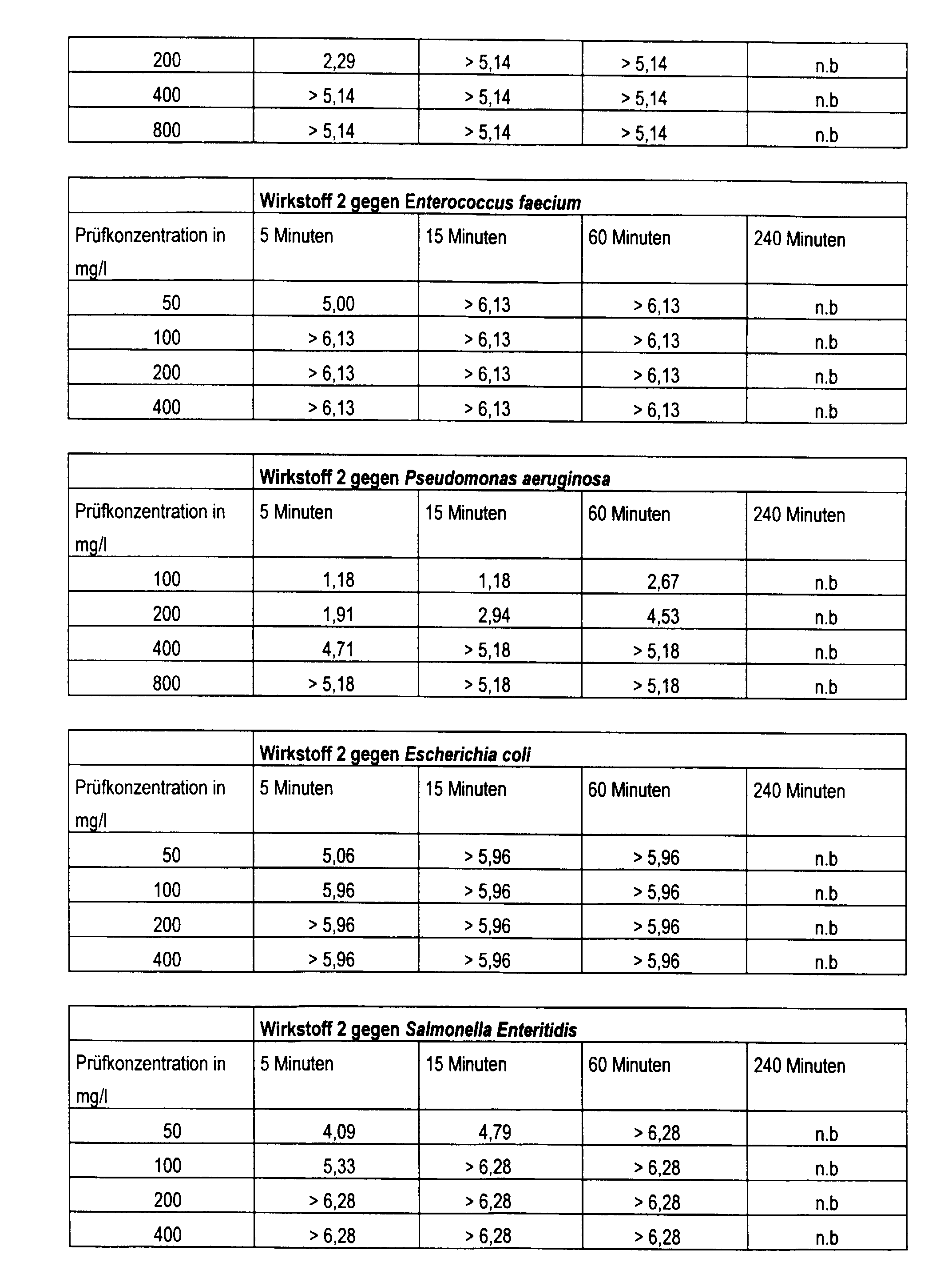

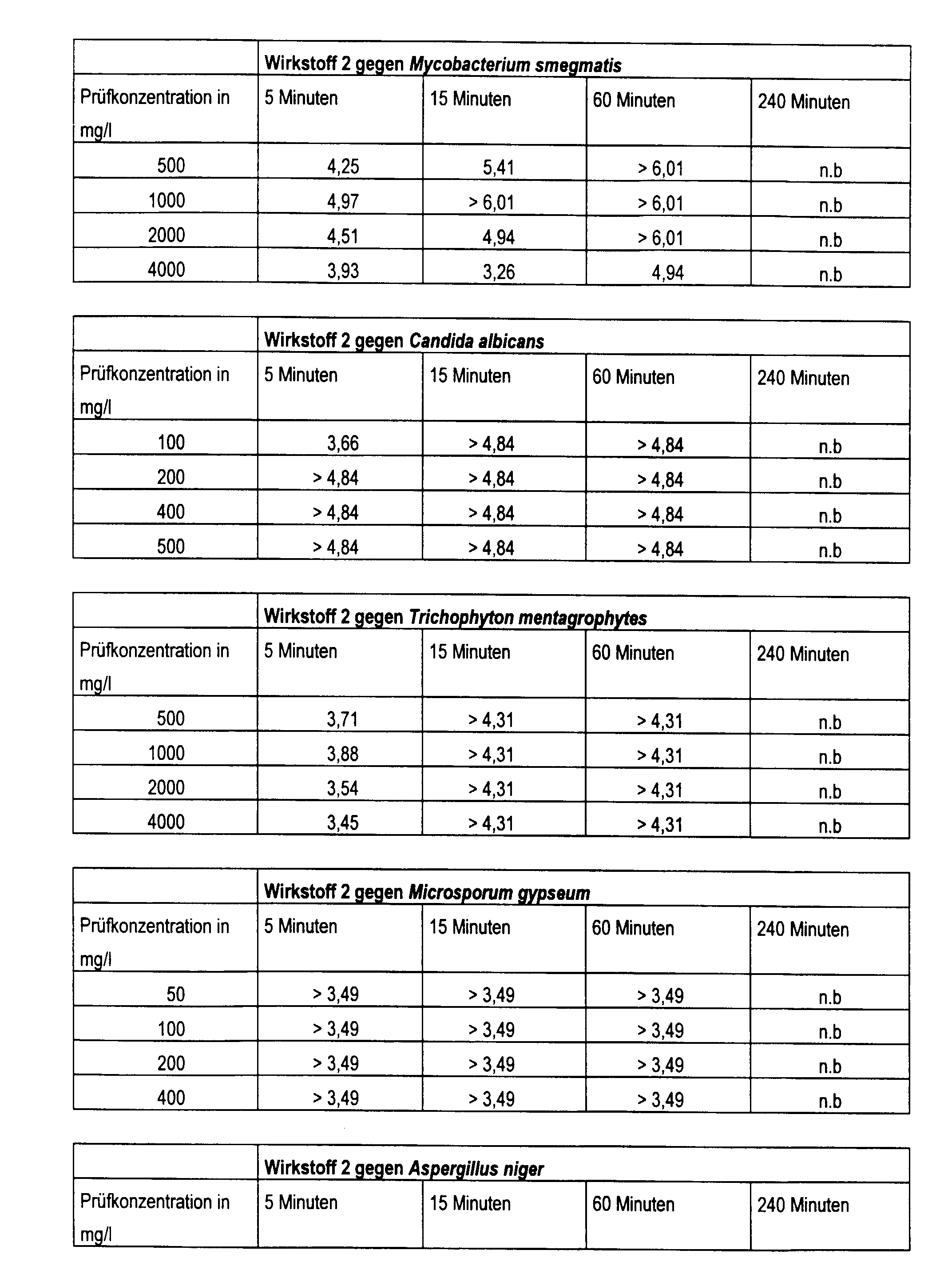

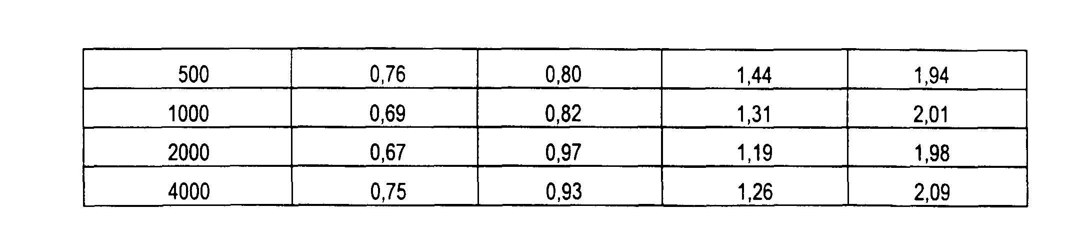

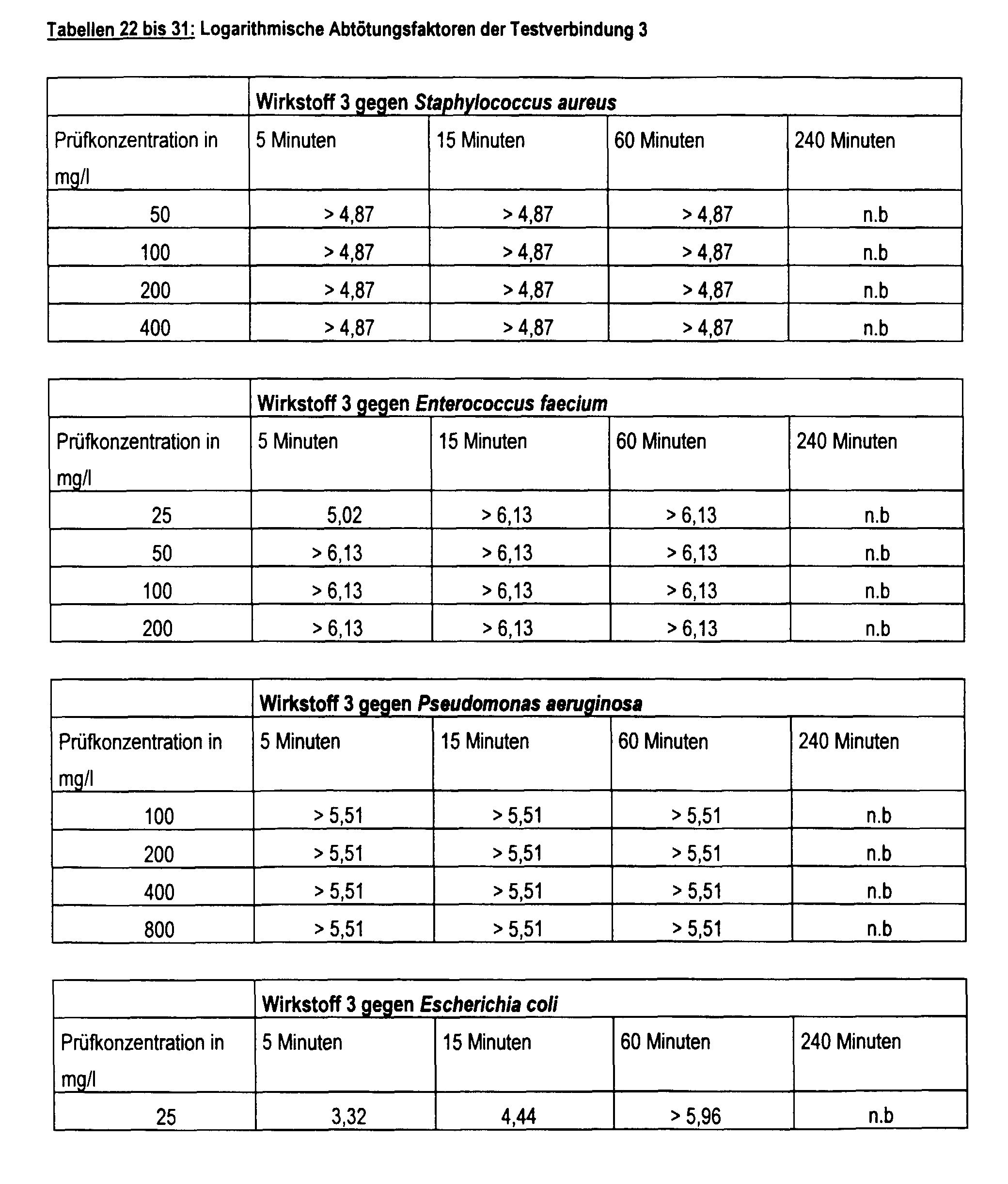

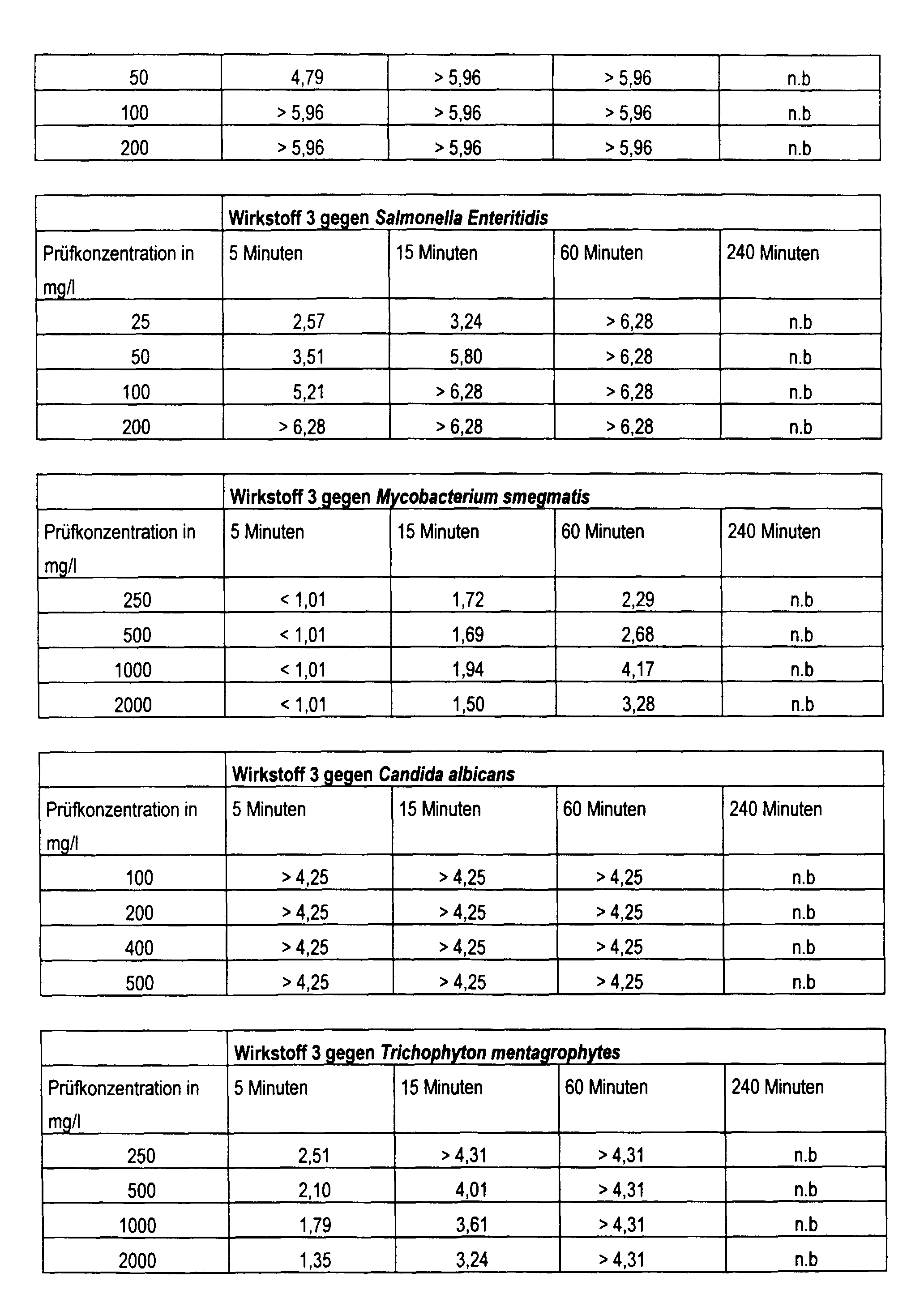

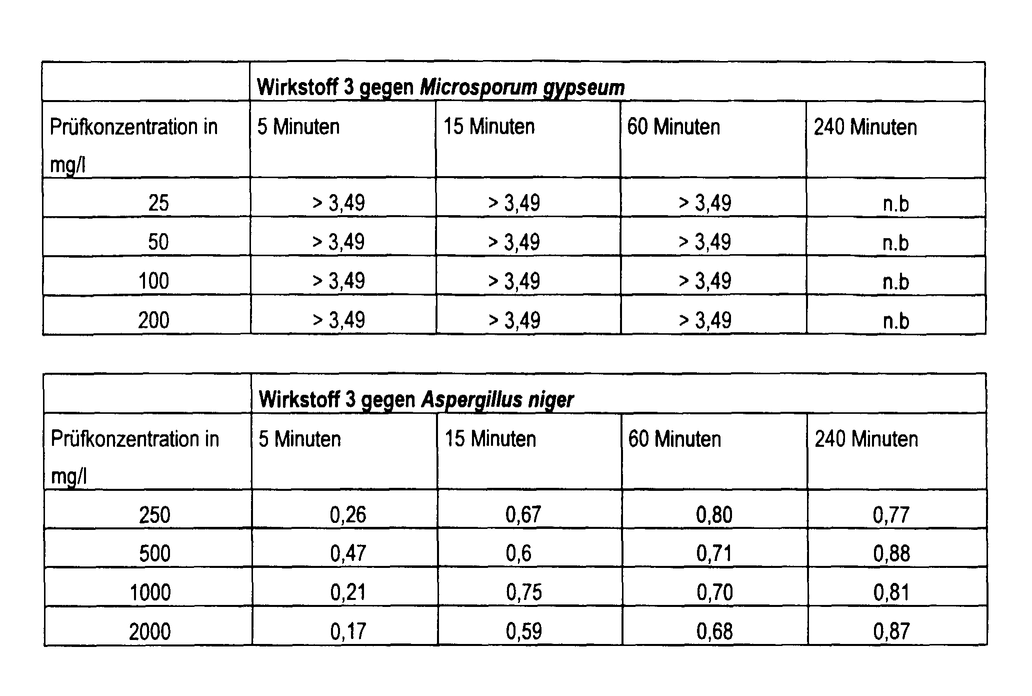

## Patentansprüche

1. Verwendung von Betainestem der Formel **(I)**, 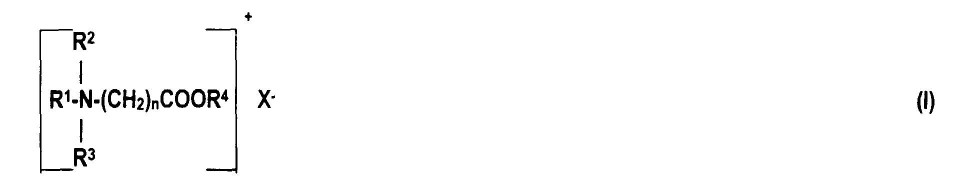 in der
R¹ für lineare und/oder verzweigte Alkyl- und/oder Alkenylreste und/oder aromatische- und/oder cycloaliphatische Reste mit 2 bis 22 Kohlenstoffatomen,
R², R³ unabhängig voneinander für Alkyl- und/oder Hydroxyalkylreste mit 1 bis 8 Kohlenstoffatomen,
R⁴ für R¹ oder
eine [A-OOC-(CH₂)ₙNR¹ R²R³]⁺ X⁻-Gruppe,
in der A für Alkylenreste mit 2 bis 22 Kohlenstoffatomen steht und/oder
Reste [-CH₂CHR⁵-(OCH₂CHR⁵)ₚ-], in denen R⁵ für H und/oder Methyl und p für Zahlen von 1 bis 10 stehen;
n für Zahlen von 1 bis 6 und
X für ein Anion steht, als mikrobizide Wirkstoffe.

2. Verwendung nach Anspruch 1, **dadurch gekennzeichnet,** daß man Betainester der Formel (I) einsetzt, in der R¹ für lineare und/oder verzweigte Alkyl- und/oder Alkenylreste und/oder aromatische- und/oder cycloaliphatische Reste mit 8 bis 18 Kohlenstoffatomen, R², R³ unabhängig voneinander für lineare und/oder verzweigte Alkyl- und/oder Hydroxyalkylreste mit 2 bis 4 Kohlenstoffatomen, R⁴ für lineare und/oder verzweigte Alkyl- und/oder Alkenylreste mit 8 bis 18 Kohlenstoffatomen, n für 1 und X für Halogenid oder Alkylsulfat steht.

3. Verwendung nach Anspruch 1, **dadurch gekennzeichnet,** daß man Betainester der Formel (I) einsetzt, in der R¹ für lineare und/oder verzweigte Alkyl- und/oder Alkenylreste mit 8 bis 18 Kohlenstoffatomen, R², R³ unabhängig voneinander für lineare und/oder verzweigte Alkyl- und/oder Hydroxyalkylreste mit 2 bis 4 Kohlenstoffatomen, R⁴ für eine [A-OOC-(CH₂)ₙNR¹ R²R³]⁺X⁻-Gruppe, in der A für Alkylenreste mit 2 bis 18 Kohlenstoffatomen oder Reste [-CH₂CHR⁵-(OCH₂CHR⁵)ₚ-], in denen R⁵ für H und/oder Methyl und p für Zahlen von 1 bis 10 stehen; n für 1 und X f|r Halogenid oder Alkylsulfat steht.

4. Verwendung nach mindestens einem der Ansprüche 1 bis 3, **dadurch gekennzeichnet,** daß man die Betainester in Mengen von 50 bis 4000 mg/l einsetzt.

5. Verwendung nach mindestens einem der Ansprüche 1 bis 4, **dadurch gekennzeichnet,** daß man die Betainester zur Herstellung von kosmetischen und/oder pharmazeutischen Zubereitungen einsetzt.

6. Verwendung nach mindestens einem der Ansprüche 1 bis 5, **dadurch gekennzeichnet,** daß man die Betainester zur Herstellung von Wasch- und/oder Reinigungsmitteln einsetzt.

7. Verfahren zur Konservierung von flüssigen oberflächenaktiven Mitteln, bei dem man den wäßrigen Zubereitungen eine wirksame Menge von Betainestem der Formel **(I)** zugesetzt, 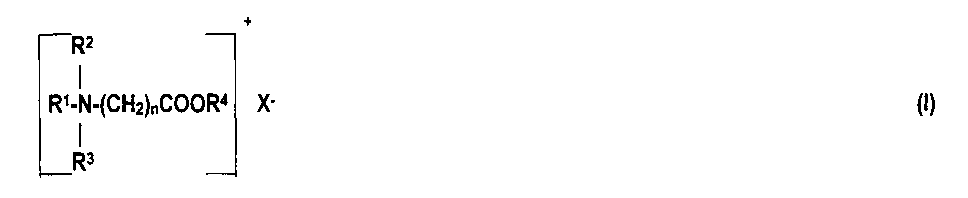 in der
R¹ für lineare und/oder verzweigte Alkyl- und/oder Alkenylreste und/oder aromatische- und/oder cycloaliphatische Reste mit 2 bis 22 Kohlenstoffatomen,
R², R³ unabhängig voneinander für Alkyl- und/oder Hydroxyalkylreste mit 1 bis 8 Kohlenstoffatomen,
R⁴ für R¹ oder
eine [A-OOC-(CH₂)ₙNR¹ R²R³]⁺ X⁻-Gruppe,
in der A für Alkylenreste mit 2 bis 22 Kohlenstoffatomen steht und/oder
Reste [-CH₂CHR⁵-(OCH₂CHR⁵)ₚ-], in denen R⁵ für H und/oder Methyl und p für Zahlen von 1 bis 10 stehen;
n für Zahlen von 1 bis 6 und
X für ein Anion steht.

8. Oberflächenaktive Mittel, **dadurch gekennzeichnet,** daß sie eine zur Konservierung wirksame Menge von Betainestem der Formel **(I)** enthalten, 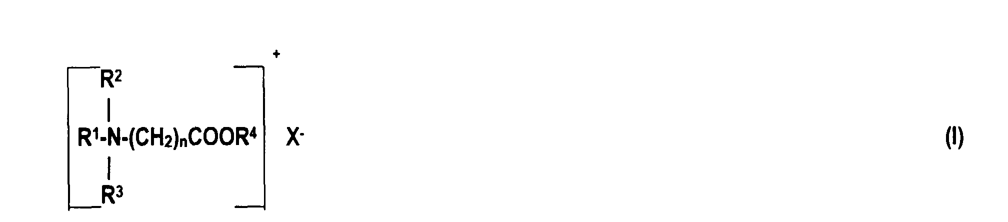 in der
R¹ für lineare und/oder verzweigte Alkyl- und/oder Alkenylreste und/oder aromatische- und/oder cycloaliphatische Reste mit 2 bis 22 Kohlenstoffatomen,
R², R³ unabhängig voneinander für Alkyl- und/oder Hydroxyalkylreste mit 1 bis 8 Kohlenstoffatomen,
R⁴ für R¹ oder
eine [A-OOC-(CH₂)ₙNR¹ R²R³]⁺ X⁻-Gruppe,
in der A für Alkylenreste mit 2 bis 22 Kohlenstoffatomen steht und/oder
Reste [-CH₂CHR⁵-(OCH₂CHR⁵)ₚ-], in denen R⁵ für H und/oder Methyl und p für Zahlen von 1 bis 10 stehen;
n für Zahlen von 1 bis 6 und
X für ein Anion steht.
